# EUROPEAN PATENT APPLICATION

(11) **EP 1 265 386 A1**
(43) Date of publication of application: **11.12.2002**
(21) Application number: 02712335.5
(22) Date of filing: 14.02.2002
(51) Int. Cl.: H04H 1/00, G06F 17/60, H04N 7/173

(54) **BROADCAST TRANSMITTER**

(30) Priority: 20.02.2001 JP 2001042632
(71) Applicant: Sony Corporation, Tokyo 141-0001 (JP)
(72) Inventor: HIRAYAMA, Tomoshi, c/o SONY CORPORATION, Tokyo 141-0001 (JP)
(74) Representative: Thévenet, Jean-Bruno
(86) International application number: JP0201219
(87) International publication number: WO02067474

(57) **Abstract**

A broadcast transmission apparatus is disclosed which, simultaneously during broadcast of a program, announces holding of letter-guessing games or lottos; solicits participants in such games; and allows the participants to verify whether they have won in what they are taking part of. A lottery issuing device 1 issues lottery data and winning ticket data. A transmitting device 2 transmits the lottery data and winning ticket data in multiplexed relation with the broadcast program. A receiving device 3 receives the lottery data over a sub-band of the broadcast program being received, generates user lottery data made of a character string for participation in the lottery, receives the winning ticket data, and judges whether the user lottery data have won based on the winning ticket data. If the user lottery data are judged to have won, the receiving device 3 transmits to a management server 4 the winning user lottery data along with a receiving device profile including user information. The management server 4 verifies that the user lottery data from the receiving device 3 constitute a win and transmits a winning report to the lottery issuing device 1 along with the receiving device profile. The invention applies to any broadcast whereby characters are transmitted along with a broadcast program.

## Description

### TECHNICAL FIELD

The present invention relates to a broadcast transmission apparatus and, more particularly, to a broadcast transmission apparatus which, simultaneously during broadcast of a program, announces holding of letter-guessing games or lottos; solicits participants in such games; and allows the participants to verify whether they have won in what they are taking part of.

### BACKGROUND ART

Coming into general use today are techniques for broadcasting advertisements and solicitations for lottos, letter-guessing games, and other prize-offering contests (simply called the lottery hereunder where appropriate) by having such information multiplexed in a sub-code over a sub-band of the airwaves of broadcast programs being transmitted.

The sub-code-based multiplexed broadcast announcing the lottery with attractive prizes for users receiving a broadcast program involves transmitting information about the prize-offering contest in characters for these users to read. An objective of such broadcast is to solicit as many participants as possible in the prize contest as potential viewers (of TV shows) or listeners (to the radio) adding to the existing recipients of broadcast programs.

Heretofore, the announcement of a prize contest multiplexed in the sub-code was typically broadcast simultaneously with a TV or radio program. The users who received the broadcast program (i.e., those who selected the channel of the station broadcasting the program in question) would read character-based information announcing the contest and soliciting participants in it. In turn, those who were interested would buy tickets over the counter if the contest was held lottery-style, or would write and mail physically or electronically postcards specifying numbers or letters if the content was carried out quiz-style.

The proceedings above had a number of disadvantages. First of all, the participants had to take the trouble to write and mail postcards physically, go out and purchase tickets where they were sold, or gain access to the Internet to participate electronically in the contest. The process was a tiresome, time-consuming chore that tended to discourage users from taking part in the game. The general tendency was for the number of participants to drop over time, which did not help the effort to increase the number of viewers or listeners of the broadcast programs.

Typically in the case of lotteries where prizes were not sent to the winners of the contest, the participants had to verify whether they had winning tickets in the newspaper or in other publications. Once they found themselves to be winners, the participants had to report their winning tickets to the sponsor of the contest and make necessary arrangements to receive the prizes. The trouble involved on the part of the participants in ascertaining their wins and getting prizes was considerable.

### DISCLOSURE OF INVENTION

The present invention has been made in view of the above circumstances and provides a broadcast transmission apparatus which, simultaneously during broadcast of a program, announces holding of lottos, letter-guessing games, or other prize contests exemplified by lotteries; solicits participants in such games; and allows the participants to verify whether they have won in what they are taking part of.

In carrying out the invention and according to a first aspect thereof, there is provided a broadcast transmission apparatus comprising: an announcement information storing element for storing announcement information for soliciting participation in a letter-guessing game or a lotto; a winning information storing element for storing winning information about the letter-guessing game or about the lotto; an announcement information transmitting element for transmitting the announcement information stored by the announcement information storing element, the announcement information being multiplexed with a broadcast program when transmitted; and a winning information transmitting element for transmitting the winning information stored by the winning information storing element, the winning information being multiplexed with the broadcast program when transmitted.

The announcement information may include participation restriction information for restricting participation in the letter-guessing game or the lotto.

The announcement information transmitting element may transmit a random character string for use in the letter-guessing game or the lotto in addition to the announcement information, the random character string being multiplexed with the broadcast program when transmitted.

The announcement information transmitting element may transmit the announcement information together with broadcast program identification information for identifying the broadcast program, the announcement information and the broadcast program identification information being multiplexed with the broadcast program when transmitted.

The winning information transmitting element may transmit the winning information together with broadcast program identification information for identifying the broadcast program, the winning information and the broadcast program identification information being multiplexed with the broadcast program when transmitted.

According to a second aspect of the invention, there is provided a broadcast transmission method comprising the steps of: storing announcement information for soliciting participation in a letter-guessing game or a lotto; storing winning information about the letter-guessing game or the lotto; transmitting announcement information stored in the announcement information storing step, the announcement information being multiplexed with a broadcast program when transmitted; and transmitting the winning information stored in the winning information storing step, the winning information being multiplexed with the broadcast program when transmitted.

According to a third aspect of the invention, there is provided a first storage medium which stores a program comprising the steps of: storing announcement information for soliciting participation in a letter-guessing game or a lotto; storing winning information about the letter-guessing game or the lotto; transmitting announcement information stored in the announcement information storing step, the announcement information being multiplexed with a broadcast program when transmitted; and transmitting the winning information stored in the winning information storing step, the winning information being multiplexed with the broadcast program when transmitted.

According to a fourth aspect of the invention, there is provided a first program comprising the steps of: storing announcement information for soliciting participation in a letter-guessing game or a lotto; storing winning information about the letter-guessing game or the lotto; transmitting announcement information stored in the announcement information storing step, the announcement information being multiplexed with a broadcast program when transmitted; and transmitting the winning information stored in the winning information storing step, the winning information being multiplexed with the broadcast program when transmitted.

According to a fifth aspect of the invention, there is provided a broadcast reception apparatus comprising: an announcement information receiving element for receiving announcement information for soliciting participation in a letter-guessing game or a lotto, the announcement information being multiplexed with a broadcast program while being transmitted; an announcement information storing element for storing the announcement information received by the announcement information receiving element; an inputting element for inputting characters or numerals corresponding to the announcement information stored by the announcement information storing element; an input character storing element for storing the characters or the numerals input by the inputting element; a winning information receiving element for receiving winning information about the letter-guessing game or the lotto, the winning information being multiplexed with the broadcast program while being transmitted; a winning information storing element for storing the winning information received by the winning information receiving element; a comparing element for comparing the characters or the numerals input by the inputting element with the winning information stored by the winning information storing element; and a winning judging element for judging, based on a result of the comparison by the comparing element, whether the characters or the numerals stored by the input character storing element constitute a win.

The broadcast reception apparatus may further comprise a triggering element for designating a time at which to receive the announcement information, and the announcement information receiving element may receive the announcement information at the time designated by the triggering element.

The announcement information may include restriction information for restricting characters or numerals that may be input by the inputting element. The broadcast reception apparatus may further comprise an input character restricting element for judging whether the characters or the numerals input by the inputting element comply with the restriction information, the input character restricting element further restricting the characters or numerals that may be input based on a result of the judgment.

The announcement information may include valid period restriction information for restricting a valid period during which characters or numerals can be input by the inputting element. The broadcast reception apparatus may further comprise an input period restricting element for restricting the period during which to input the characters or the numerals based on the valid period restriction information.

The announcement information may include time information for designating a time at which the winning information is to be transmitted, and the winning information receiving element may receive the winning information at the designated time at which the winning information is transmitted.

The announcement information may include participation restriction information for restricting the solicited participation in the letter-guessing game or the lotto. The broadcast reception apparatus may further comprise a participation restriction-based input restricting element for restricting input of the characters or the numerals by the inputting element in accordance with the participation restriction information.

The broadcast reception apparatus may further comprise a communicating element for communicating with an information processing apparatus over a network. The communicating element may execute a bet payment process in conjunction with the information processing apparatus based on an ID identifying each broadcast reception apparatus and on a profile of a user having each identified broadcast reception apparatus, the communicating element further receiving a confirmation of payment from the information processing apparatus when the bet payment process is completed.

If the characters or the numerals are judged to constitute a win by the winning judging element, then the communicating element may transmit to the information processing apparatus a winning report comprising the characters or the numerals input by the inputting element, the ID, the profile, and the confirmation of payment. The information processing apparatus may further judge whether the winning report is valid upon comparing the announcement information with the winning information.

The announcement information may include valid period information for defining a valid period during which to make the winning report. If the characters or the numerals are judged to constitute a win by the winning judging element, then the communicating element may transmit to the information processing apparatus the winning report comprising the characters or the numerals input by the inputting element, the ID, the profile, and the confirmation of payment. The information processing apparatus may further judge whether the winning report is valid upon comparing the announcement information with the winning information and upon determining whether the winning report falls within the valid period.

The announcement information receiving element may receive a random character string for use in the letter-guessing game or the lotto in addition to the announcement information, the random character string being multiplexed with the broadcast program.

The announcement information receiving element may receive the announcement information along with the program identification information for identifying the broadcast program, the announcement information being multiplexed with the broadcast program.

The winning information receiving element may receive the winning information along with the program identification information for identifying the broadcast program, the winning information being multiplexed with the broadcast program.

According to a sixth aspect of the invention, there is provided a broadcast reception method comprising the steps of: receiving announcement information for soliciting participation in a letter-guessing game or a lotto, the announcement information being multiplexed with a broadcast program while being transmitted; storing the announcement information received in the announcement information receiving step; inputting characters or numerals corresponding to the announcement information stored in the announcement information storing step; storing the characters or the numerals input in the inputting step; receiving winning information about the letter-guessing game or the lotto, the winning information being multiplexed with the broadcast program while being transmitted; storing the winning information received in the winning information receiving step; comparing the characters or the numerals input in the inputting step with the winning information stored in the winning information storing step; and judging, based on a result of the. comparison in the comparing step, whether the characters or the numerals stored in the input character storing step constitute a win.

According to a seventh aspect of the invention, there is provided a second storage medium which stores a program comprising the steps of: receiving announcement information for soliciting participation in a letter-guessing game or a lotto, the announcement information being multiplexed with a broadcast program while being transmitted; storing the announcement information received in the announcement information receiving step; inputting characters or numerals corresponding to the announcement information stored in the announcement information storing step; storing the characters or the numerals input in the inputting step; receiving winning information about the letter-guessing game or the lotto, the winning information being multiplexed with the broadcast program while being transmitted; storing the winning information received in the winning information receiving step; comparing the characters or the numerals input in the inputting step with the winning information stored in the winning information storing step; and judging, based on a result of the comparison in the comparing step, whether the characters or the numerals stored in the input character storing step constitute a win.

According to an eighth aspect of the invention, there is provided a second program comprising the steps of: receiving announcement information for soliciting participation in a letter-guessing game or a lotto, the announcement information being multiplexed with a broadcast program while being transmitted; storing the announcement information received in the announcement information receiving step; inputting characters or numerals corresponding to the announcement information stored in the announcement information storing step; storing the characters or the numerals input in the inputting step; receiving winning information about the letter-guessing game or the lotto, the winning information being multiplexed with the broadcast program while being transmitted; storing the winning information received in the winning information receiving step; comparing the characters or the numerals input in the inputting step with the winning information stored in the winning information storing step; and judging, based on a result of the comparison in the comparing step, whether the characters or the numerals stored in the input character storing step constitute a win.

According to a ninth aspect of the invention, there is provided a broadcasting system comprising a broadcast transmission apparatus for transmitting a broadcast program and a broadcast reception apparatus for receiving the broadcast program; wherein the broadcast transmission apparatus includes: a first announcement information storing element for storing announcement information for soliciting participation in a letter-guessing game or a lotto; a first winning information storing element for storing winning information about the letter-guessing game or about the lotto; an announcement information transmitting element for transmitting the announcement information stored by the first announcement information storing element, the announcement information being multiplexed with the broadcast program when transmitted; and a winning information transmitting element for transmitting the winning information stored by the first winning information storing element, the winning information being multiplexed with the broadcast program when transmitted; and wherein the broadcast reception apparatus includes: an announcement information receiving element for receiving the announcement information for soliciting participation in the letter-guessing game or the lotto, the announcement information being multiplexed with the broadcast program while being transmitted; a second announcement information storing element for storing the announcement information received by the announcement information receiving element; an inputting element for inputting characters or numerals corresponding to the announcement information stored by the second announcement information storing element; an input character storing element for storing the characters or the numerals input by the inputting element; a winning information receiving element for receiving the winning information about the letter-guessing game or the lotto, the winning information being multiplexed with the broadcast program while being transmitted; a second winning information storing element for storing the winning information received by the winning information receiving element; a comparing element for comparing the characters or the numerals input by the inputting element with the winning information stored by the second winning information storing element; and a winning judging element for judging, based on a result of the comparison by the comparing element, whether the characters or the numerals stored by the input character storing element constitute a win.

The announcement information may include participation restriction information for restricting participation in the letter-guessing game or the lotto.

The broadcasting system may further comprise a participation restriction-based input restricting element for restricting input of the characters or the numerals by the inputting element in accordance with the participation restriction information.

The announcement information transmitting element may transmit a random character string for use in the letter-guessing game or the lotto in addition to the announcement information, the random character string being multiplexed with the broadcast program when transmitted.

The announcement information transmitting element may transmit the announcement information along with program identification information for identifying the broadcast program, the announcement information being multiplexed with the broadcast program when transmitted.

The winning information transmitting element may transmit the winning information along with program identification information for identifying the broadcast program, the winning information being multiplexed with the broadcast program when transmitted.

The broadcasting system may further comprise a triggering element for designating a time at which to receive the announcement information, and the announcement information receiving element may receive the announcement information at the time designated by the triggering element.

The announcement information may include restriction information for restricting characters or numerals that may be input by the inputting element. The broadcasting system may further comprise an input character restricting element for judging whether the characters or the numerals input by the inputting element comply with the restriction information, the input character restricting element further restricting the characters or numerals that may be input based on a result of the judgment.

The announcement information may include valid period restriction information for restricting a valid period during which characters or numerals can be input by the inputting element. The broadcasting system may further comprise an input period restricting element for restricting the period during which to input the characters or the numerals based on the valid period restriction information.

The announcement information may include time information for designating a time at which the winning information is to be transmitted, and the winning information receiving element may receive the winning information at the designated time at which the winning information is transmitted.

The broadcasting system may further comprise a communicating element for communicating with an information processing apparatus over a network. The communicating element may execute a bet payment process in conjunction with the information processing apparatus based on an ID identifying each broadcast reception apparatus and on a profile of a user having each identified broadcast reception apparatus, the communicating element further receiving a confirmation of payment from the information processing apparatus when the bet payment process is completed.

If the characters or the numerals are judged to constitute a win by the winning judging element, then the communicating element may transmit to the information processing apparatus a winning report comprising the characters or the numerals input by the inputting element, the ID, the profile, and the confirmation of payment. The information processing apparatus may further judge whether the winning report is valid upon comparing the announcement information with the winning information.

The announcement information may include valid period information for defining a valid period during which to make the winning report. If the characters or the numerals are judged to constitute a win by the winning judging element, then the communicating element may transmit to the information processing apparatus the winning report comprising the characters or the numerals input by the inputting element, the ID, the profile, and the confirmation of payment. The information processing apparatus may further judge whether the winning report is valid upon comparing the announcement information with the winning information and upon determining whether the winning report falls within the valid period.

The announcement information receiving element may receive a random character string for use in the letter-guessing game or the lotto in addition to the announcement information, the random character string being multiplexed with the broadcast program.

The announcement information receiving element may receive the announcement information along with the program identification information for identifying the broadcast program, the announcement information being multiplexed with the broadcast program.

The winning information receiving element may receive the winning information along with the program identification information for identifying the broadcast program, the winning information being multiplexed with the broadcast program.

According to a tenth aspect of the invention, there is provided a broadcasting method for use with a broadcasting system comprising a broadcast transmission-apparatus for transmitting a broadcast program and a broadcast reception apparatus for receiving the broadcast program, the broadcasting method being made up of a broadcast transmission method and a broadcast reception method for use with the broadcast transmission apparatus and the broadcast reception apparatus respectively; wherein the broadcast transmission method comprises the steps of: firstly storing announcement information for soliciting participation in a letter-guessing game or a lotto; firstly storing winning information about the letter-guessing game or about the lotto; transmitting the announcement information stored in the first announcement information storing step, the announcement information being multiplexed with the broadcast program when transmitted; and transmitting the winning information stored in the first winning information storing step, the winning information being multiplexed with the broadcast program when transmitted; and wherein the broadcast reception method comprises the steps of: receiving the announcement information for soliciting participation in the letter-guessing game or the lotto, the announcement information being multiplexed with the broadcast program while being transmitted; secondly storing the announcement information received in the announcement information receiving step; inputting characters or numerals corresponding to the announcement information stored in the second announcement information storing step; storing the characters or the numerals input in the inputting step; receiving the winning information about the letter-guessing game or the lotto, the winning information being multiplexed with the broadcast program while being transmitted; secondly storing the winning information received in the winning information receiving step; comparing the characters or the numerals input in the inputting step with the winning information stored in the second winning information storing step; and judging, based on a result of the comparison in the comparing step, whether the characters or the numerals stored in the input character storing step constitute a win.

According to an eleventh aspect of the invention, there is provided a third storage medium which stores a program made up of a broadcast transmission apparatus controlling program and a broadcast reception apparatus controlling program; wherein the broadcast transmission apparatus controlling program comprises the steps of: firstly storing announcement information for soliciting participation in a letter-guessing game or a lotto; firstly storing winning information about the letter-guessing game or about the lotto; transmitting the announcement information stored in the first announcement information storing step, the announcement information being multiplexed with a broadcast program when transmitted; and transmitting the winning information stored in the first winning information storing step, the winning information being multiplexed with the broadcast program when transmitted; and wherein the broadcast reception apparatus controlling program comprises the steps of: receiving the announcement information for soliciting participation in the letter-guessing game or the lotto, the announcement information being multiplexed with the broadcast program while being transmitted; secondly storing the announcement information received in the announcement information receiving step; inputting characters or numerals corresponding to the announcement information stored in the second announcement information storing step; storing the characters or the numerals input in the inputting step; receiving the winning information about the letter-guessing game or the lotto, the winning information being multiplexed with the broadcast program while being transmitted; secondly storing the winning information received in the winning information receiving step; comparing the characters or the numerals input in the inputting step with the winning information stored in the second winning information storing step; and judging, based on a result of the comparison in the comparing step, whether the characters or the numerals stored in the input character storing step constitute a win.

According to a twelfth aspect of the invention, there is provided a third program for controlling a broadcast transmission apparatus controlling computer and a broadcast reception apparatus controlling computer; wherein the program causes the broadcast transmission apparatus controlling computer to execute the steps of: firstly storing announcement information for soliciting participation in a letter-guessing game or a lotto; firstly storing winning information about the letter-guessing game or about the lotto; transmitting the announcement information stored in the first announcement information storing step, the announcement information being multiplexed with a broadcast program when transmitted; and transmitting the winning information stored in the first winning information storing step, the winning information being multiplexed with the broadcast program when transmitted; and wherein the program causes the broadcast reception apparatus controlling computer to execute the steps of: receiving the announcement information for soliciting participation in the letter-guessing game or the lotto, the announcement information being multiplexed with the broadcast program while being transmitted; secondly storing the announcement information received in the announcement information receiving step; inputting characters or numerals corresponding to the announcement information stored in the second announcement information storing step; storing the characters or the numerals input in the inputting step; receiving the winning information about the letter-guessing game or the lotto, the winning information being multiplexed with the broadcast program while being transmitted; secondly storing the winning information received in the winning information receiving step; comparing the characters or the numerals input in the inputting step with the winning information stored in the second winning information storing step; and judging, based on a result of the comparison in the comparing step, whether the characters or the numerals stored in the input character storing step constitute a win.

Through the use of the broadcast transmission apparatus, the broadcast transmission method, and the first program according to the invention, announcement information for soliciting participation in a letter-guessing game or a lotto is initially stored. Winning information about the letter-guessing game or the lotto is also stored. The stored announcement information is transmitted in multiplexed relation with the broadcast program. The stored winning information is transmitted in multiplexed relation with the broadcast program.

Through the use of the broadcast reception apparatus, the broadcast reception method, and the second program according to the invention, announcement information for soliciting participation in a letter-guessing game or a lotto is initially received in multiplexed relation with the broadcast program while being transmitted. The received announcement information is stored. Characters or numerals corresponding to the stored announcement information are then input. The input characters or numerals are also stored. Winning information about the letter-guessing game or the lotto is received in multiplexed relation with the broadcast program. The received winning information is stored. The input characters or numerals are compared with the stored winning information. Based on a result of the comparison, it is judged whether the stored characters or numerals constitute a win.

Through the use of the broadcasting system, the broadcasting method, and the third program according to the invention, announcement information for soliciting participation in a letter-guessing game or a lotto is initially stored by the broadcast transmission apparatus of the system. Winning information about the letter-guessing game or about the lotto is also stored by the broadcast transmission apparatus. The stored announcement information is transmitted in multiplexed relation with the broadcast program. The stored winning information is transmitted by the apparatus in multiplexed relation with the broadcast program. The announcement information for soliciting participation in the letter-guessing game or the lotto is received by the broadcast reception apparatus of the system in multiplexed relation with the broadcast program. The received announcement information is stored. Characters or numerals corresponding to the announcement information are then input, and the input characters or numerals are stored. The winning information about the letter-guessing game or the lotto is received by the broadcast reception apparatus in multiplexed relation with the broadcast program. The received winning information is stored. The input characters or numerals are compared with the stored winning information. Based on a result of the comparison, it is judged whether the stored characters or numerals constitute a win.

### BRIEF DESCRIPTION OF DRAWINGS

Fig. 1 is a block diagram of a broadcasting system embodying this invention;
Fig. 2 is a block diagram of a lottery issuing device included in Fig. 1;
Fig. 3 is a block diagram of a transmitting device included in Fig. 1;
Fig. 4 is a block diagram of a receiving device included in Fig. 1;
Fig. 5 is an external view of the receiving device shown in Fig. 4;
Fig. 6 is another external view of the receiving device of Fig. 4;
Fig. 7 is a block diagram of a management server included in Fig. 1;
Fig. 8 is a schematic view showing a typical structure of lottery data issued by the lottery issuing device of Fig. 2;
Fig. 9 is a schematic view depicting a typical structure of lottery data stored by the receiving device of Fig. 4;
Fig. 10 is a schematic view illustrating a typical data structure of a character string input by the receiving device of Fig. 4;
Fig. 11 is a schematic view indicating a typical data structure of random character strings output by the transmitting device of Fig. 3;
Fig. 12 is a schematic view expressing a typical data structure of an input restriction signal output by the transmitting device of Fig. 3;
Fig. 13 is a schematic view exhibiting a typical structure of winning ticket data transmitted by the transmitting device of Fig. 3;
Fig. 14 is a schematic view presenting another typical structure of winning ticket data transmitted by the transmitting device of Fig. 3;
Fig. 15 is a schematic view sketching another typical structure of winning ticket data transmitted by the transmitting device of Fig. 3;
Fig. 16 is a schematic view picturing a typical structure of winning ticket data stored by the receiving device of Fig. 4;
Fig. 17 is a flowchart of steps in which the lottery issuing device issues winning ticket data;
Fig. 18 is a flowchart of steps in which the transmitting device of Fig. 3 receives winning ticket data;
Fig. 19 is a flowchart of steps in which the management server of Fig. 7 receives winning ticket data;
Fig. 20 is a flowchart of steps in which the transmitting device of Fig. 3 transmits winning ticket data;
Fig. 21 is a flowchart of steps in which the transmitting device of Fig. 3 transmits an input restriction signal;
Fig. 22 is a flowchart of steps in which the transmitting device of Fig. 3 transmits a random signal;
Fig. 23 is a flowchart of steps in which the receiving device of Fig. 4 receives lottery data;
Fig. 24 is a flowchart of steps in which the receiving device of Fig. 4 checks qualifications for participation in a lottery;
Fig. 25 is a flowchart of steps in which the management server of Fig. 7 checks qualifications for participation in a lottery;
Fig. 26 is a flowchart of steps in which the receiving device of Fig. 4 receives winning ticket data;
Fig. 27 is a flowchart of steps in which the receiving device of Fig. 4 makes a judgment on winning;
Fig. 28 is a flowchart of steps in which the management server of Fig. 7 receives winning ticket data; and
Fig. 29 is a flowchart of steps in which the lottery issuing device of Fig. 1 gives a display of winners.

### BEST MODE FOR CARRYING OUT THE INVENTION

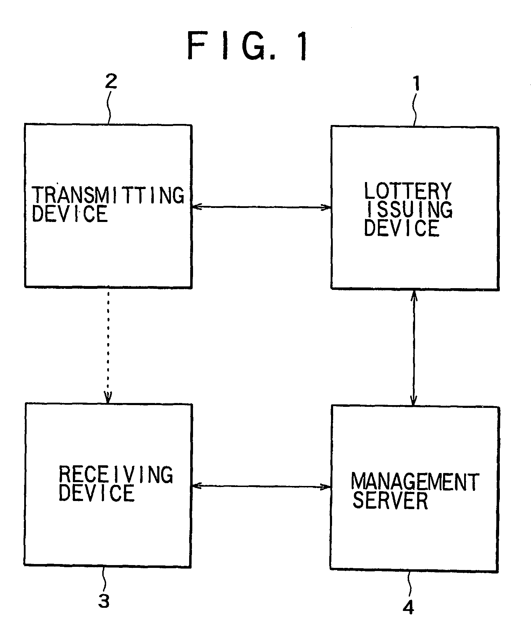

Fig. 1 is a block diagram of a broadcasting system embodying this invention. A lottery issuing device 1 operated by an enterprise offering lotteries issues lottery data and winning ticket data corresponding to the issued lottery data. The issued data are output to a transmitting device 2 and a management server 4 over the Internet. The transmitting device 2 transmitting a broadcast program as a broadcast signal receives the lottery data or winning ticket data from the lottery issuing device 1, converts the received data into a predetermined broadcast signal format, and places the converted data on a sub-band of the broadcast signal being transmitted (i.e., broadcast) using a sub-code called a bookmark multiplexed with identification information for identifying the broadcast program in question. More details about the bookmark as the sub-code are disclosed illustratively in Japanese Patent Application No. 2000-077627 submitted previously by this applicant.

A receiving device 3 receives a broadcast signal transmitted (broadcast) by the transmitting device 2 and reproduces the broadcast program out of the received signal while simultaneously receiving the sub-code carrying the lottery data and winning ticket data sent over the sub-band. The receiving device 3 may input characters or numerals for participation in a lottery. Based on the lottery data and winning ticket data received, the receiving device 3 judges whether the input characters or numerals constitute a win. If the characters or numerals are judged to have won, the receiving device 3 transmits a winning report to the management server 4. If purchase of a lottery ticket involves a bet payment, the receiving device 3 carries out a bet payment process in conjunction with the management server 4 via the Internet.

The management server 4 stores the lottery data and winning ticket data received from the lottery issuing device 1. Given a winning report from the receiving device 3, the management server 4 ascertains whether the reported lottery ticket indeed constitutes a win based on the stored lottery data and winning ticket data. When the reported data are confirmed to have won, the management server 4 notifies the lottery issuing device 1 of the win.

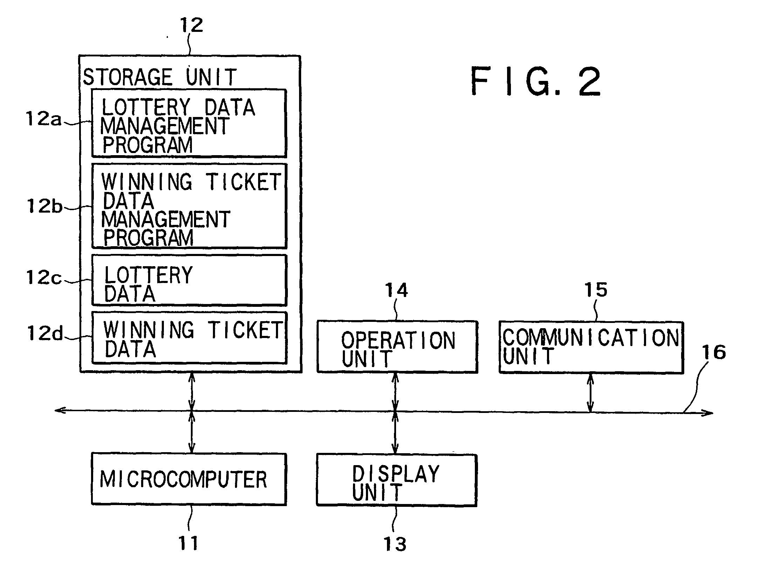

How the lottery issuing device 1 is structured will now be described by referring to Fig. 2. A microcomputer 11 of the lottery issuing device 1 is made up of a CPU (central processing unit), a RAM (random access memory) and a ROM (read only memory) and serves to control the device 1 as a whole. A storage unit 12 is connected to the microcomputer 11 through a bus 16 and is constituted illustratively by a storage medium such as a hard disc drive (HDD).

The storage unit 12 stores a lottery data management program 12a, a winning ticket data management program 12b, lottery data 12c, and winning ticket data 12d. The lottery data management program 12a and winning ticket data management program 12b manage the lottery data 12c and winning ticket data 12d respectively. A user intending to issue a lottery manipulates an operation unit 14 such as a keyboard while viewing a display screen on a display unit 13 illustratively made of an LCD (liquid crystal display), whereby the lottery data 12c and winning ticket data 12d are issued in a way reflecting the input. When outputting the lottery data 12c and winning ticket data 12d to the transmitting device 2, the user operates the operation unit 14 to control a communication unit 15 which in turn causes the lottery data management program 12a and winning ticket data management program 12b to output respectively the lottery data 12c and winning ticket data 12d to the transmitting device 2 as well as to the management server 4 over the Internet.

By controlling the communication unit 15, the lottery data management program 12a receives information about the receiving device (receiving device ID and receiving device profile, to be described later) owned by each winning participant, the information being sent from the management server 4 over the Internet. The received information is displayed on the display unit 13.

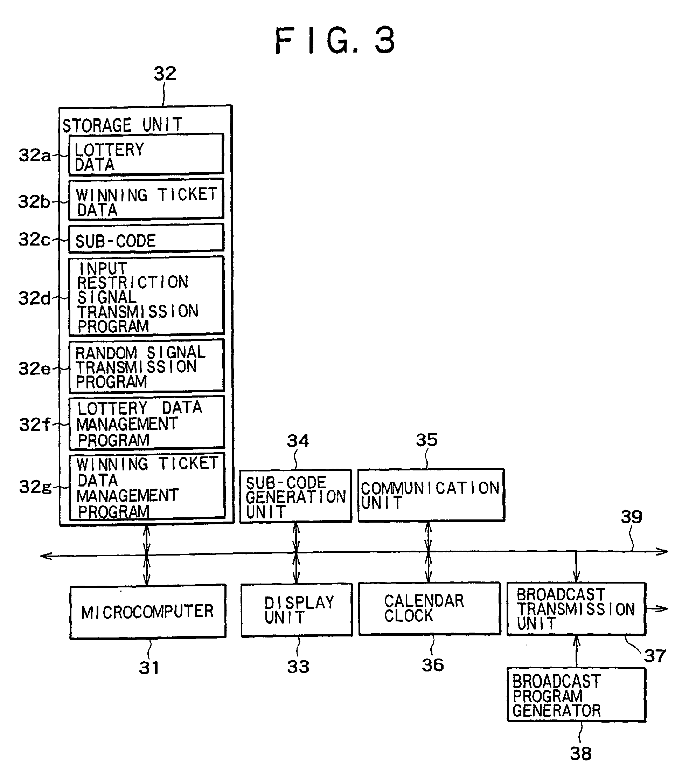

How the transmitting device 2 is structured will now be described with reference to Fig. 3. A microcomputer 31 of the transmitting device 2 is made up of a CPU, a RAM and a ROM and serves to control the device 2 as a whole. The microcomputer 31 reads various programs as needed from a storage unit 32 into the built-in RAM for execution.

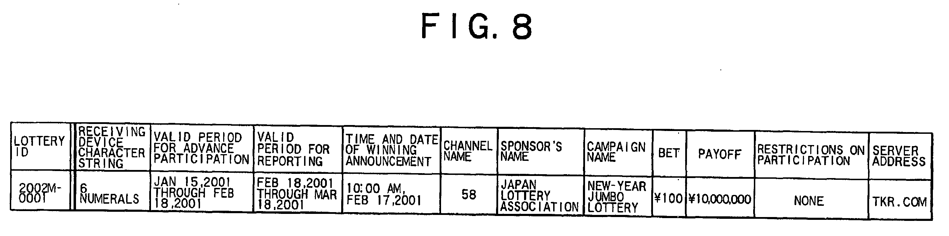

The storage unit 32 is connected to the microcomputer 31 through a bus 39 and is constituted illustratively by a hard disc drive (HDD). The storage unit 32 stores lottery data 32a, winning ticket data 32b, a sub-code 32c, an input restriction signal transmission program 32d, a random signal transmission program 32e, a lottery data management program 32f, and a winning ticket data management program 32g. Under control of the lottery data management program 32f or winning ticket data management program 32g executed by the microcomputer 31, the storage unit 32 stores the lottery data 32a (the same as the lottery data 12c) and the winning ticket data 32b (the same as the winning ticket data 12d) received from the lottery issuing device 1 through a communication unit 35. Similarly under control of the lottery data management data 32f or winning ticket data management program 32g, the storage unit 32 outputs the lottery data 32a or winning ticket data 32b to a sub-code generation unit 34 which in turn generates the sub-code 32c. The generated sub-code 32c is stored by the storage unit 32. Based on information about a valid period for advance participation (Fig. 8) as part of the lottery data 32a, the lottery data management program 32f or winning ticket data management program 32g causes a broadcast transmission unit 37 to transmit (i.e., broadcast) to each receiving device 3 the sub-code 32c carrying the lottery data 32a or winning ticket data 32b along with a broadcast program signal generated by a broadcast program generator 38.

The input restriction signal transmission program 32d judges whether current time information output by a calendar clock 36 falls within the valid period for advance participation, to be described later, as noted in the lottery data 32a. Then the input restriction signal transmission program 32d outputs a signal reporting the judgment to the broadcast transmission unit 37 (specifically, a signal for restricting the input of user lottery data is output to the unit 37).

If a character string corresponding to the receiving device character string (Fig. 8) included in the lottery data 32a is a random character string and if the current time information output by the calendar clock 36 falls within the valid period for advance participation in the lottery data 32, then the random signal transmission program 32e causes the broadcast transmission unit 37 to output a random numeral signal. The lottery data 32a and winning ticket data 32b will be described later in more detail with reference to Fig. 8.

The display unit 33 illustratively made of an LCD displays various data under control of the microcomputer 31. The calendar clock 36 generates the current time information and manages the timings of various processes. The broadcast transmission unit 37 constituted by a multiplexer and a transmitting antenna, not shown, transmits (i.e., broadcasts) a broadcast program generated by the broadcast program generator 38 as a broadcast signal. At the same time, the broadcast transmission unit 37 transmits the sub-code 32c carrying converted lottery data 32 and winning ticket data 32b in multiplexed relation with the sub-band of the broadcast program being transmitted.

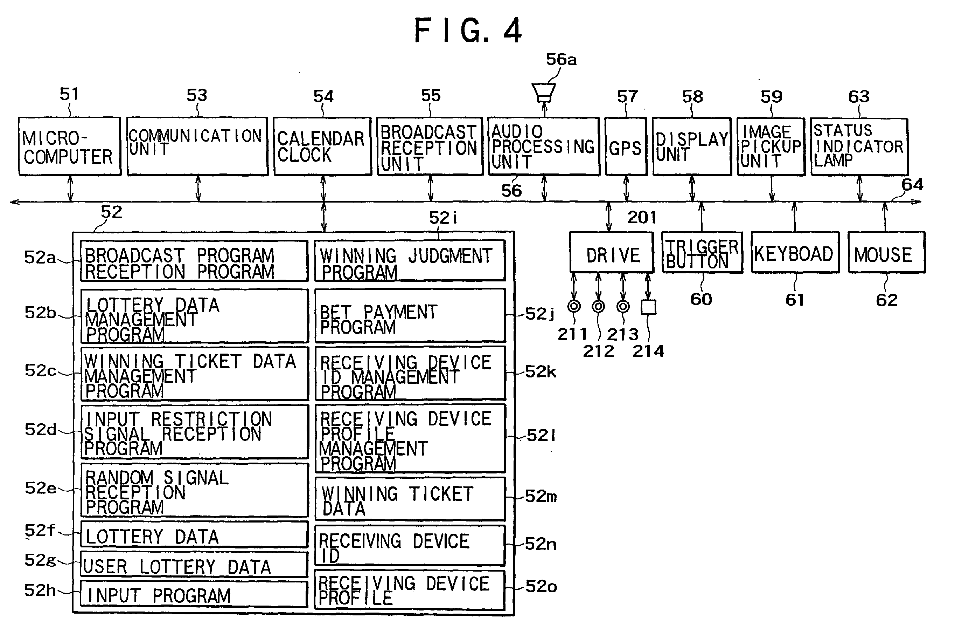

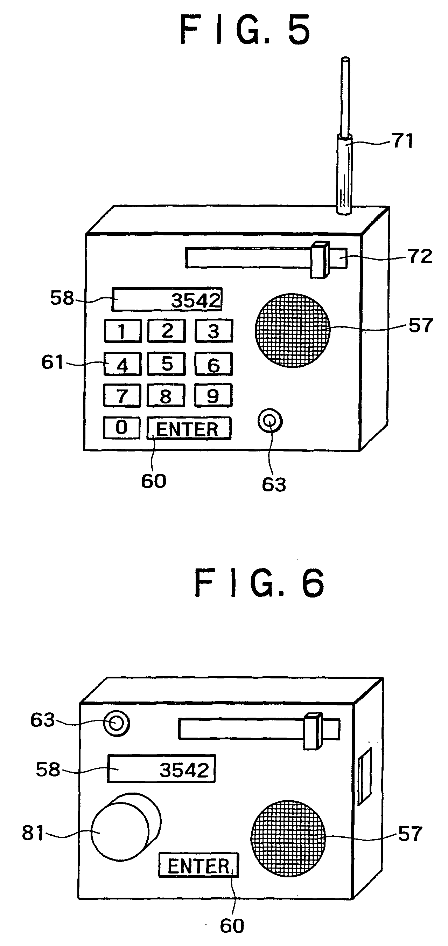

How the receiving device 3 is structured will now be described by referring to Figs. 4 and 5. Fig. 4 is a block diagram of the receiving device 3, and Fig. 5 is an external view of the device 3. A microcomputer 51 of the receiving device 3 is made up of a CPU, a RAM and a ROM and serves to control the device 3 as a whole. The microcomputer 51 reads various programs from a storage unit 52 into the built-in RAM for execution.

The storage unit 52 is connected to the microcomputer 51 through a bus 64 and is constituted illustratively by a hard disc drive (HDD). The storage unit 52 stores a broadcast program reception program 52a, a lottery data management program 52b, a winning ticket data management program 52c, an input restriction signal reception program 52d, a random signal reception signal 52e, lottery data 52f, user lottery data 52g, an input program 52h, a winning judgment program 52i, a bet payment program 52j, a receiving device ID management program 52k, a receiving device profile management program 52l, winning ticket data 52m, a receiving device ID 52n, and a receiving device profile 52o.

In keeping with the traverse position of a slider 72 shown in Fig. 5, the broadcast program reception program 52a causes a broadcast reception unit 55 composed of a tuner to receive an appropriate radio frequency representing a desired broadcast program on a specific channel, and outputs an audio signal of the received broadcast program to an audio processing unit 56 which in turn provides audio output through speakers 56a.

The lottery data management program 52b causes the broadcast reception unit 55 to bring into the storage unit 52 the lottery data 52f that are received when a trigger button 60 is operated by the user intending to read a sub-code from the received broadcast program. The winning ticket data management program 52c gets the broadcast reception unit 55 to place the winning ticket data 52m received as the sub-code into the storage unit 52.

In accordance with an input restriction signal received by the broadcast reception unit 55, the input restriction signal reception program 52d turns on a status indicator lamp 63 and allows the input program 52h to restrict input of the user lottery data 52g. Even if the broadcast reception unit 55 does not receive the input restriction signal (where the signal is not sent from the transmitting device 2), the input restriction signal reception program 52d may cause the input program 52h to restrict input of the user lottery data 52g based on the valid period for advance participation noted in the lottery data 52f and on the time information output by the calendar clock 54.

The random signal reception program 52e causes the broadcast reception unit 55 to receive a random signal and reads a random character string that is received when the trigger button 60 is pressed. The random character string thus received is stored as the user lottery data 52g. As mentioned above, the trigger button 60 is operated on two occasions: upon retrieval of the sub-code, and upon reading of the random character string.

The input program 52h permits input of lottery participation information comprising: a trigger signal entered by operation of the trigger button 60, characters and numerals entered through a keyboard 61, position information furnished by a GPS (global positioning system) 57, and an image captured by an image pickup unit 59. The participation information thus input is stored as the user lottery data 52n in the storage unit 52 while the characters and numerals are displayed concurrently on a display unit 58. In the above example, the keyboard 61 was described as means for inputting characters or numerals as part of the user lottery data 52n. However, this is not limitative of the invention. Alternatively, the keyboard 51 may be replaced by a dial 81 shown in Fig. 6. Turning the dial 81, the user may watch numerals being displayed on the display unit 58 and press the trigger button 60 where appropriate to finalize each entry of a necessary number.

The winning judgment program 52i compares the user lottery data 52g with the winning ticket data 52m to judge whether the user lottery data 52g have won. Following the judgment, the winning judgment program 52i causes the communication unit 53 to output the result of the judgment to the management server 4 over the Internet.

If participation in the lottery involves payment of a bet for each lottery ticket, the bet payment program 52j causes the communication unit 53 to execute a bet payment process on the user lottery data in conjunction with the management server 4.

The receiving device ID management program 52k manages receiving device IDs 52n each identifying a receiving device 3 using a manufacturer's name, a serial number of manufacture and other data. The receiving device profile management program 52l manages receiving device profiles 52o each describing personal information about the user of each receiving device 3, the information including the user's name, profession, and phone number.

The broadcast reception unit 55 is made up of an antenna 71 as well as a tuner, a demodulator and a demultiplexer, not shown. The user operates the keyboard 61 or the like based on information displayed on the display unit 58 such as an LCD in order to get the audio signal reproduced from the broadcast program sent from the transmitting device 2 over the selected channel. The reproduced audio signal is output through the speakers 56a.

A drive 201 is loaded with a storage medium such as a magnetic disc 211, an optical disc 212, a magneto-optical disc 213, or a semiconductor memory 214. The microcomputer 51 writes various data items to the storage medium, and reads stored data and programs as needed from the storage medium into a RAM for processing or execution.

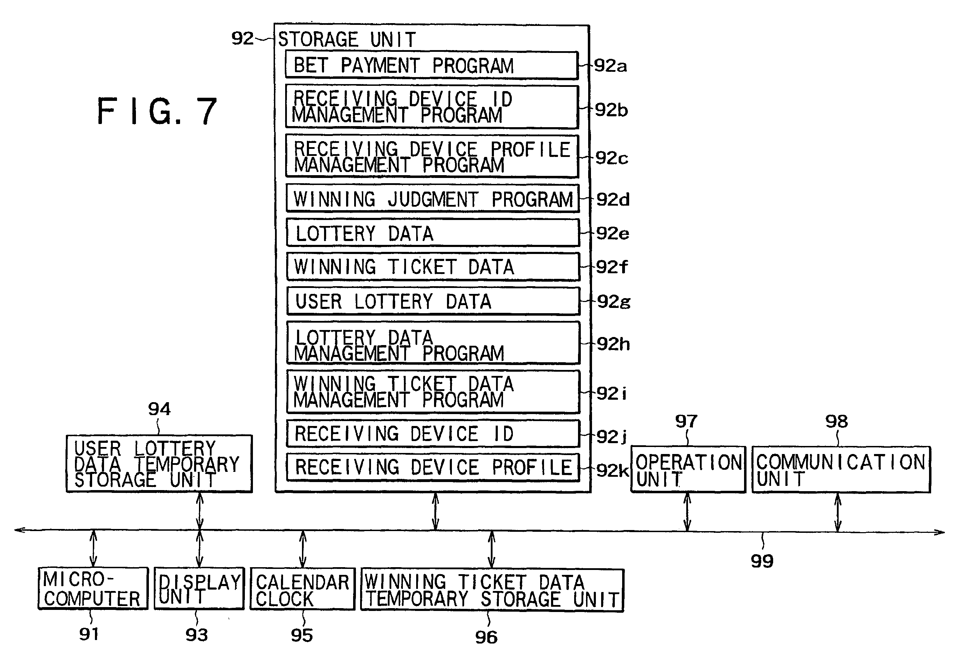

How the management server 4 is structured will now be described with reference to Fig. 7. A microcomputer 91 of the management server 4 is made up of a CPU, a RAM and a ROM and acts to control the server 4 as a whole.

A storage unit 92 is connected to the microcomputer 91 through a bus 99 and is constituted illustratively by a hard disc drive (HDD). The storage unit 92 stores a bet payment program 92a, a receiving device ID management program 92b, a receiving device profile management program 92c, a winning judgment program 92d, winning judgment program 92d, lottery data 92e, winning ticket data 92f, user lottery data 92g, a lottery data management program 92h, a winning ticket data management program 92i, a receiving device ID 92j, and a receiving device profile 92k.

If the lottery data 92e involve bet payment, the bet payment program 92a executes a bet payment process in conjunction with the receiving device 3 by illustratively outputting a credit card number to the management server 4. The method of bet payment is not limited to the credit card alone; digital cash, a direct debit against a bank account, or other suitable procedures may be adopted instead. In such cases, the receiving device 3 and management server 4 will exchange data necessary for transactions of the digital cash, direct debit, or other procedures.

The receiving device ID management program 92b and receiving device profile management program 92c receive respectively the receiving device ID 92j and receiving device profile 92k from the receiving device 3 via a communication unit 98, and store the received ID and device profile as needed for subsequent use in various processes.

Upon receipt of a winning report containing the user lottery data 92g from the receiving device 3 via the communication unit 98, the winning judgment program 92d places into a user lottery data temporary storage unit 94 the user lottery data 92g reported as having won by the receiving device 3l. The program 92d also places into the user lottery data temporary storage unit 94 the lottery data 92e and winning ticket data 92f corresponding to the lottery ID of the user lottery data 92g. By comparing the user lottery data 92g with the winning ticket data 92f, the winning judgment program 92d judges whether the user's data 92g indeed constitute a win.

A display unit 93 is constituted illustratively by an LCD. Under control of the microcomputer 91, the display unit 93 displays characters that are input by operation of an operation unit 97.

Described below with reference to Fig. 8 is a typical structure of the lottery data 12c (32a) issued by the lottery issuing device 1 and transmitted by the transmitting device 2.

As shown in the leftmost column of Fig. 8, each group of lottery data is headed by a lottery data ID that allows the various programs to identify the lottery data of interest. The lottery data in this example are identified by a lottery ID "2002M-0001." Stored next to the lottery ID is a receiving device character string that indicates conditions for the letter-guessing game or lotto being played. A notation "6 numerals" in the example indicates that the receiving device character string is made up of six numerals such as "123456" registered as a lottery number with the receiving device 3. Alternatively, the receiving device character string may include miscellaneous characters illustratively constituting: a mountain name, a random character string, a fish's name, a katakana-only character string, a color name (e.g., one of red, blue and yellow), a geographical name, a time-of-day, an alternate "yes/no" entry, or any one of numeric characters 1 through 3.

Recorded next to the receiving device character string is a valid period for advance participation. This is a period during which lottery tickets can be purchased (i.e., participation in the lottery is allowed). The example shows the valid period to be between January 15, 2001 and February 14, 2001. Participation in the lottery is permitted at any point in time during that valid period.

Stored next to the valid period for advance participation is a valid period for reporting. This is a period during which owners of winning tickets may report to the enterprise that holds the lottery in order to obtain offered prizes. The example shows the valid period for reporting to be between February 18, 2001 and March 18, 2001. Reporting of winning tickets is accepted at any point in time during that valid period.

Recorded next to the valid period for reporting are a time and a date of winning announcement. The example shows that a winning announcement is to be made at 10:00 a.m., February 17, 2001.

Stored next to the time and date of winning announcement is a channel name. This is the name of the channel whose sub-code is used to transmit (i.e., broadcast) the lottery data in question. The example shows the channel name to be "58" whose sub-code carries the lottery data.

Recorded next to the channel name is a sponsor's name, i.e., the name of the sponsor offering this lottery. This example shows that the sponsor's name is the Japan Lottery Association. Next to the sponsor's name is recorded a campaign name, i.e., the name of the campaign for promoting the lottery. The example shows that the campaign is named "New-Year Jumbo Lottery."

Stored next to the campaign name is a bet for this lottery. The example shows the bet to be ¥100, which is what each ticket of this lottery is worth. Next to the bet is recorded a payoff, i.e., the amount of money to be paid to participants who bought winning lottery tickets. The example shows the payoff to be ¥10,000,000.

Next to the payoff is recorded any restriction that may be imposed on participation in this lottery. The example shows there is no restriction on the participants. Where necessary, restricting conditions such as "males only" or "females only" may be illustratively established.

Stored next to the restrictions on participation is a server address, i.e., the address of the lottery issuing device 1 that has issued this lottery. The example shows the server address to be "TKR.COM," at which the lottery issuing device 1 having issued this lottery is located.

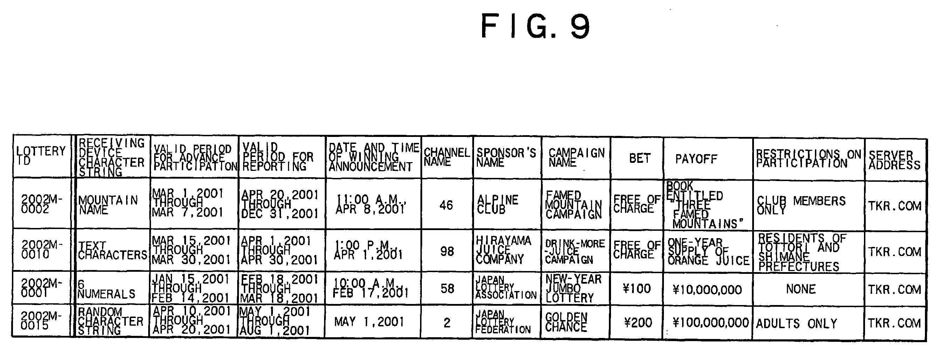

Described below with reference to Fig. 9 is a typical structure of the lottery data 52m received from the transmitting device 2 and stored by the receiving device 3.

The data structure is basically the same as that of the lottery data 32a shown in Fig. 8. The difference is that this example comprises a plurality of groups of lottery data. More specifically, the lottery data 32a stored in the receiving device 3 include, for each lottery ID, a receiving device character string, a valid period for advance participation, a valid period for reporting, a date and time of winning announcement, a channel name, a sponsor's name, a campaign name, a bet, a payoff, restrictions on participation, and a server address. In the example, lottery IDs are indicated as 2002M-0002, 2002M-0010, 2002M-0001, and 2002M-0015 from top to bottom. The vertically arranged lottery IDs are matched respectively with receiving device character strings "mountain name," "text characters," "6 numerals," and "random character string." Likewise, the lottery IDs as arranged from top to bottom are matched respectively with valid periods for advance participation spanning "March 1, 2001 through March 7, 2001," "March 15, 2001 through March 30, 2001," "January 15, 2001 through February 14, 2001," and "April 10, 2001 through April 20, 2001"; with valid periods for reporting, spanning "April 20, 2001 through December 31, 2001," "April 1, 2001 through April 30, 2001," "January 15, 2001 through February 14, 2001," and "May 1, 2001 through August 1, 2001"; with times and dates of announcement noted here as "11:00 a.m., April 8, 2001," "1:00 p.m., April 1, 2001," "10:00 a.m., February 17, 2001," and "May 1, 2001"; with channels names "46," "98," "58," and "2"; with sponsors' names "Alpine Club," "Hirayama Juice Company," "Japan Lottery Association," and "Japan Lottery Federation"; and with campaign names "Famed Mountain Campaign," "Drink-More-Juice Campaign," "New-Year Jumbo Lottery," and "Golden Chance." The lottery IDs arranged from top to bottom are further matched respectively with bets specified here as "free of charge," "free of charge," "¥100," and "¥200"; with payoffs noted as "a book titled 'three famed mountains'," "one-year supply of orange juice," "¥10,000,000," and "¥100,000,000"; and with restrictions on participation indicated as "club members only," "residents of Tottori and Shimane Prefectures," "none," and "adults only." A server address "TKR.COM" is common to all lottery IDs.

What follows is a description of a typical structure of the user lottery data 52g entered through the receiving device 3 by the user on the basis of the lottery data 52f.

The user lottery data 52g are headed by the lottery ID such as "2002M-0001" identifying the lottery to take part in. The lottery ID is followed by a string of characters such as "654321" entered by the user operating the keyboard 61. As discussed above with reference to Figs. 8 and 9, the location next to the top of the lottery data accommodates the receiving device character string made up of characters satisfying a designated condition such as "6 characters" regarding each receiving device character string.

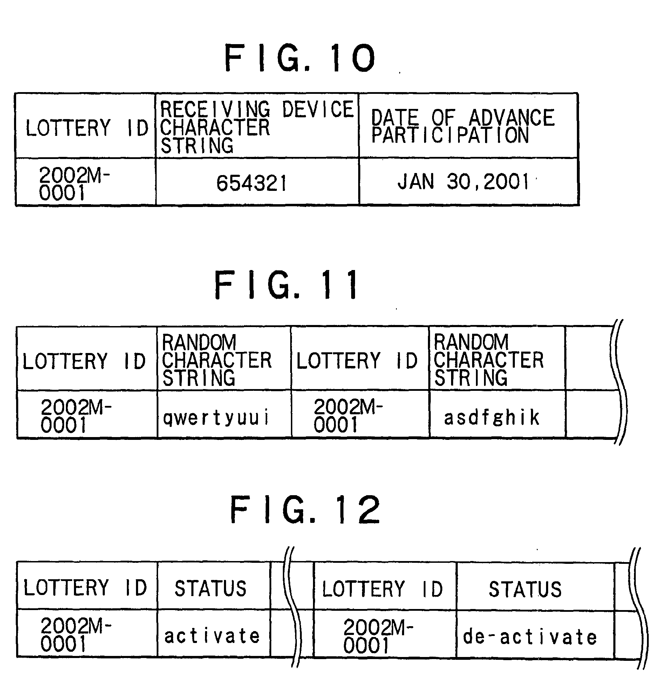

Described below with reference to Fig. 11 is a data structure of random character strings transmitted by the transmitting device 2 when the receiving device character string is designated as a random character string.

As shown in Fig. 11, the lottery ID such as "2002M-0001" of the lottery to be transmitted is recorded ahead of a random character string such as "qwertyuui" that is generated by the random signal transmission program 32e in the transmitting device 2. Each random character string is followed by another random character string in the same data structure. Illustratively, the random character string "qwertyuui" is followed by the same lottery ID "2002M-0001" which in turn is followed by another random character string such as "asdfghik," and so on. As long as the random signal transmission program 32e keeps generating random character string data, the lottery ID and random character strings are output repeatedly.

Described below with reference to Fig. 12 is a data structure of an input restriction signal designating whether the user lottery data 52g such as those shown in Fig. 10 are allowed to be input.

The input restriction signal is generated by the input restriction signal transmission program 32d in the transmitting device 2. The restriction signal is headed by the lottery ID of the lottery being played. Where user lottery data are allowed to be input, the restriction signal has a notation "activate" recorded next to the lottery ID; where the input of user lottery data is inhibited, the signal has a notation "de-activate" stored following the lottery ID. Suppose that user lottery data are allowed to be input as soon as the input restriction signal starts being transmitted. In that case, the lottery ID "2002M-0001" is followed by the notation "activate" in the input restriction signal, and the signal is transmitted repeatedly. If the input is to be inhibited halfway through the transmission, then the lottery ID "2002M-0001" is followed by the notation "de-activate" in place of "activate," and the signal is transmitted repetitively thereafter.

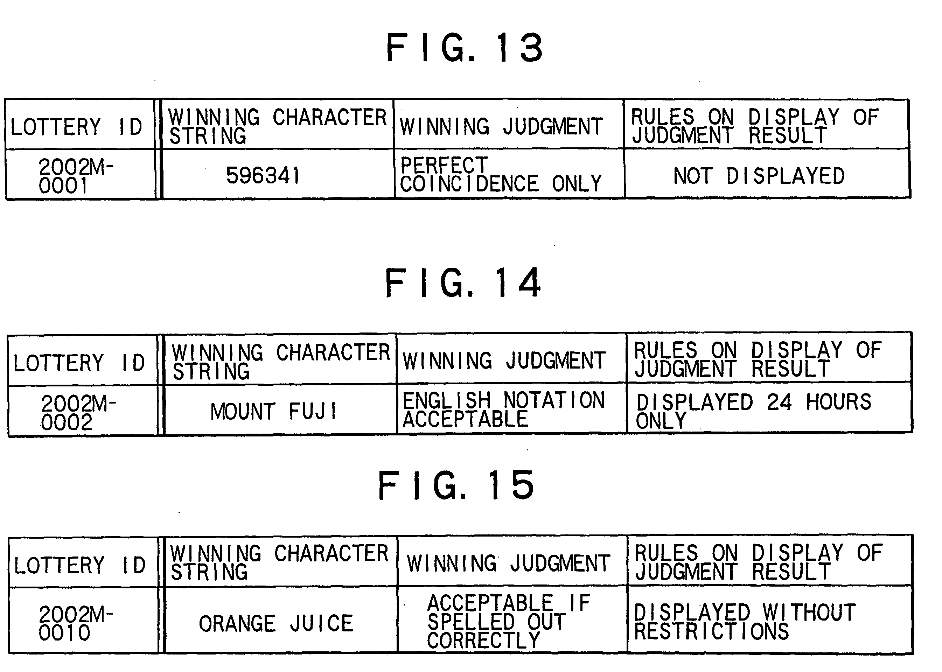

A typical structure of the winning ticket data 32b will now be described by referring to Figs. 13, 14 and 15. For example, as shown in Fig. 13, the winning ticket data 32b corresponding to the lottery ID "2002M-0001" shown in Fig. 9 are headed by that lottery ID followed by a winning character string given in this case as "596341." Set next to the winning character string is a winning judgment that describes a criterion by which to determine a win. In this example, the winning judgment designates "perfect coincidence only," which means that a win is confirmed only if all suggested characters coincide with the characters making up the winning character string (i.e., "596341"). Set next to the winning judgment are rules on display of judgment result, i.e., rules that must be complied with when the result of winning judgment is to be displayed. In this example, the rules specify that no display be made of the result.

In another example, as shown in Fig. 14, the winning ticket data 32b headed illustratively by the lottery ID "2002M-0002" indicated in Fig. 9 have a winning character string constituting the name of a mountain. In this case, "Mount Fuji" is stored as the winning character string. Set next to the winning character string is a winning judgment indicating "English notation acceptable." That means the winning character string (i.e., mountain name) may be spelled out either in Japanese or in English. Set next to the winning judgment are rules on display of judgment result. The rules in this case say that the result of winning judgment may be displayed for 24 hours starting from the designated time of winning announcement.

In another example, as shown in Fig. 15, the winning ticket data 32b headed illustratively by the lottery ID "2002M-0010" indicated in Fig. 9 have a winning character string constituting text characters. In this case, the winning character string is made up of characters "orange juice." Set next to the winning character string is a winning judgment saying that the suggested characters are accepted if spelled out correctly (with 8 characters in Japanese in this example). Set next to the winning judgment are rules on display of judgment result, indicating no restrictions this time on the display of the judgment result.

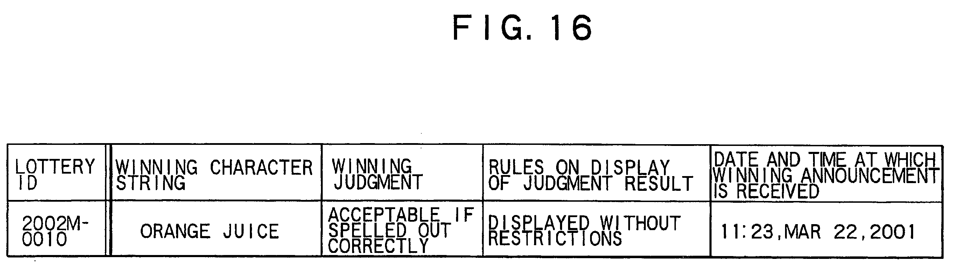

Described below with reference to Fig. 16 is a typical structure of the winning ticket data 52m that are transmitted by the transmission unit 37 of the transmitting device 2 and received by the receiving device 3 for storage into the storage unit 52.

The winning ticket data 52m are also headed by a lottery ID. If the winning ticket data 32a of, say, Fig. 15 are transmitted from the transmitting device 2, the lottery ID recorded in the data is "2002M-0010." Stored next to the lottery ID is a winning character string composed of characters "orange juice" in this example. Next to the winning character string is recorded a winning judgment saying that the suggested characters are accepted if spelled out correctly (with 8 characters in Japanese in this example). Recorded next to the winning judgment are rules on display of judgment result. The rules in this case indicate no restrictions on the display of the result. Set next to the rules on display of judgment result are a time and date of announcement, i.e., the time and date at which the receiving device 3 received the winning ticket data 32a. In this example, an entry "11:23, March 22, 2001" indicative of the time and date of announcement says that the receiving device 3 received the winning ticket data 32b from the transmitting device 2 at 11:23, on March 22, in the year 2001. That is, the winning ticket data 52m are regarded by the receiving device 3 as equivalent to the winning ticket data 32b from the transmitting device 2 supplemented with data about the time and date of announcement.

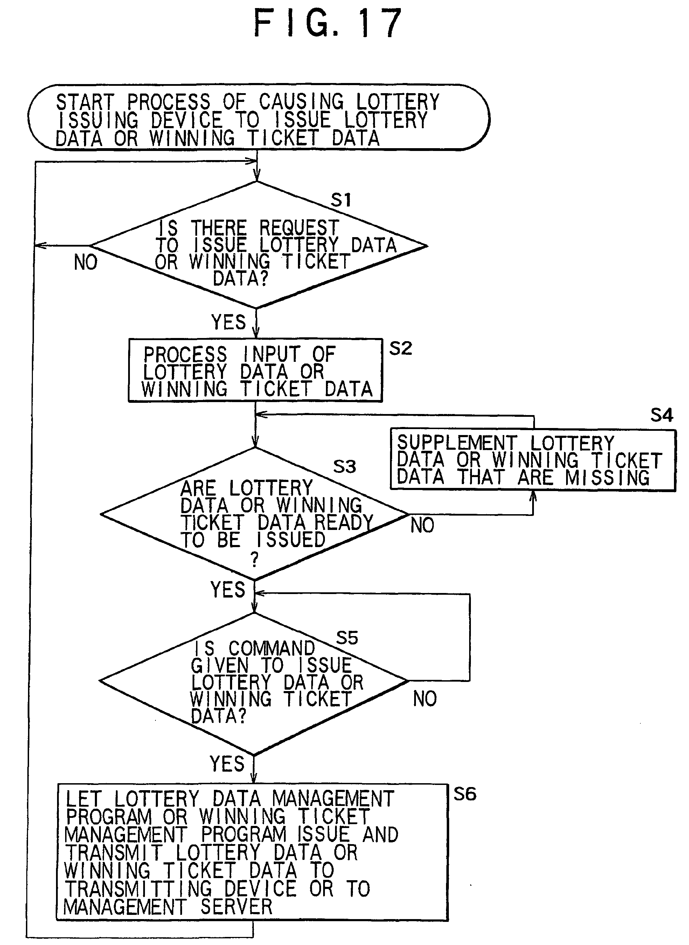

Described below with reference to the flowchart of Fig. 17 is how the lottery issuing device 1 issues the lottery data 12c or winning ticket data 12d.

In step S1, the lottery data management program 12a or winning ticket data management program 12b judges whether there is a request to issue lottery data or winning ticket data. Step S1 is repeated until such a request is detected. If a request to issue lottery data or winning ticket data is judged detected, step S2 is reached.

In step S2, the lottery data management program 12a or winning ticket data management program 12b proceeds with an input process by giving on the display unit 13 an input prompting display covering the lottery ID, receiving device character string, valid period for advance participation, valid period for reporting, time and date of announcement, channel name, sponsor's name, campaign name, bet, payoff, restrictions on participation, and server address of the lottery data 12c or winning ticket data 12d; or an input prompting display covering the winning character string, winning judgment, and rules on display of winning judgment regarding the lottery data 12c or winning ticket data 12d of interest.

In step S3, the lottery data management program 12a or winning ticket data management program 12b judges whether the necessary items of the lottery data 12c or winning ticket data 12d have all been input so that the data of interest are ready to be issued. If the data are not ready to be issued, i.e., if input of the necessary items has yet to be completed, then step S4 is reached. In step S4, any missing items of the lottery data 12c or winning ticket data 12d are supplemented. More specifically, the lottery data management program 12a or winning ticket data management program 12b gives on the display unit 13 a supplementary input prompting screen prompting the user to input any missing items. Step S4 is followed by step S3. That is, steps 3 and 4 are repeated until all necessary items of the lottery data 12c or winning ticket data 12d have been input.

If in step S3 all necessary items of the lottery data 12c or winning ticket data 12d are judged to have been input so that the data are ready to be issued, then step S5 is reached. In step S5, the lottery data management program 12a or winning ticket data management program 12b judges whether a command is given to issue the lottery data 12c or winning ticket data 12d. Step S5 is repeated until such a command is judged issued. If the command is judged to be issued, step S6 is reached.

In step S6, the lottery data management program 12a or winning ticket data management program 12b outputs the designated lottery data 12c or winning ticket data 12d to the transmitting device 2 or management server 4 through the communication unit 15 over the Internet. Step S6 is followed by step S1 and the subsequent steps are repeated.

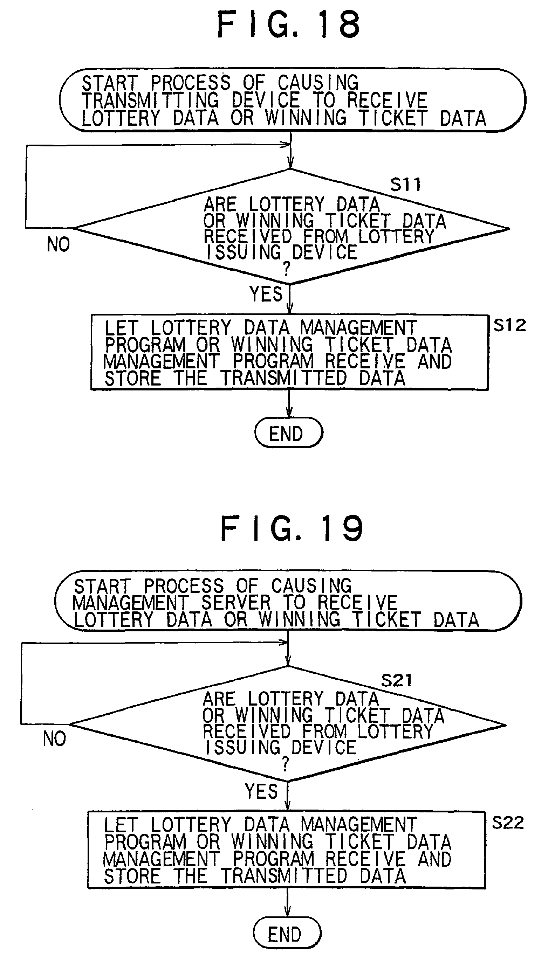

Described below with reference to the flowchart of Fig. 18 is how the transmitting device 2 receives the lottery data 12c or winning ticket data 12d from the lottery issuing device 1.

In step S11, the lottery data management program 32f or winning ticket data management program 32g judges whether the lottery data 12c or winning ticket data 12d are received from the lottery issuing device 1 through the communication unit 35 over the Internet. Step S11 is repeated until the data are judged received. If in step S11 the lottery data 12c or winning ticket data 12d are judged to be received, step S12 is reached.

In step S12, the lottery data management program 32f or winning ticket data management program 32g stores the lottery data 12c or winning ticket data 12d received through the communication unit 35 into the storage unit 32 as the lottery data 32a or winning ticket data 32b.

How the management server 4 receives the lottery data 12c or winning ticket data 12d from the lottery issuing device 1 will now be described by referring to the flowchart of Fig. 19.

In step S21, the lottery data management program 92h or winning ticket data management program 92i judges whether the lottery data 12c or winning ticket data 12d are received from the lottery issuing device 1 through the communication unit 98 over the Internet. Step S21 is repeated until the data are judged received. If in step S21 the lottery data 12c or winning ticket data 12d are judged to be received, then step S22 is reached.

In step S22, the lottery data management program 92h or winning ticket data management program 92i stores the lottery data 12c or winning ticket data 12d received through the communication unit 98 into the storage unit 92 as the lottery data 92e or winning ticket data 92f.

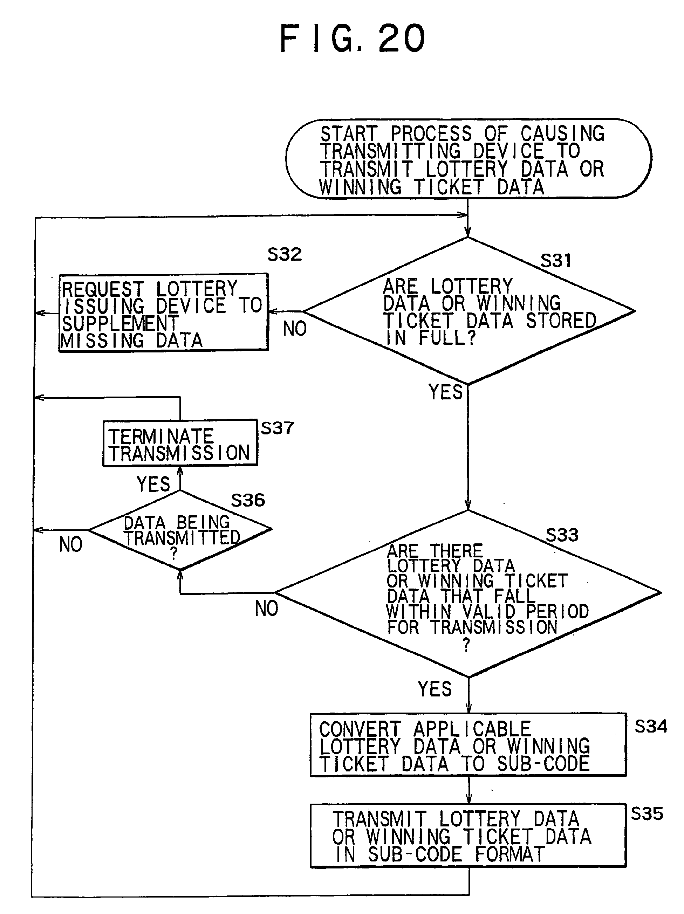

How the transmitting device 2 transmits the lottery data 32a or winning ticket data 32b will now be described by referring to the flowchart of Fig. 20.

In step S31, the lottery data management program 32f or winning ticket data management program 32g judges whether the lottery data 32a or winning ticket data 32b stored in the storage unit 32 have all necessary input items filled in, such as the lottery ID, receiving device character string, valid period for advance participation, valid period for reporting, time and date of announcement, channel name, sponsor's name, campaign name, bet, payoff, restrictions on participation, and server address of the lottery data 32c or winning ticket data 32d; or the winning character string, winning judgment, and rules on display of winning judgment regarding the lottery data 32c or winning ticket data 32d of interest. If any necessary input item is not judged to be filled in, then step S32 is reached.

In step S32, the lottery data management program 32f or winning ticket data management program 32g requests the lottery issuing device 1 to supplement any missing items of the lottery data 32a or winning ticket data 32b through the communication unit 35 over the Internet. Step S32 is followed by step S31. That is, steps S31 and S32 are repeated until all necessary input items have been entered and recorded.

If in step S31 all necessary items of the stored lottery data 32a or winning ticket data 32b are judged to be filled in, then step S33 is reached.

In step S33, the lottery data management program 32f or winning ticket data management program 32g judges whether there exist those lottery data 32a or winning ticket data 32b in the storage unit 32 which fall within a period for their transmission, i.e., within the valid period for advance participation on the basis of current time information furnished by the calendar clock 36. If such lottery data 32a or winning ticket data 32b are judged to exist, then step S34 is reached.

In step S34, the lottery data management program 32f or winning ticket data management program 32g outputs the applicable lottery data 32a or winning ticket data 32b to the sub-code generation unit 34. The unit 34 in turn converts the received data into the sub-code 32c.

In step S35, the lottery data management program 32f or winning ticket data management program 32g causes the communication unit 35 to transmit (i.e., broadcast) the sub-code 32c carrying the converted lottery data 32a or winning ticket data 32b.

If in step S33 no applicable lottery data 32a or winning ticket data 32b are judged to exist, step S36 is reached. In step S36, the lottery data management program 32f or winning ticket data management program 32g judges whether the lottery data 32a or winning ticket data 32b are being transmitted. If the data are judged to be in transmission, then step S37 is reached in which the transmission of the lottery data 32a or winning ticket data 32b is terminated. Step S37 is followed by step S31. If in step S36 the lottery data 32a or winning ticket data 32b are not judged to be in transmission, then step S31 is reached again and the subsequent steps are repeated.

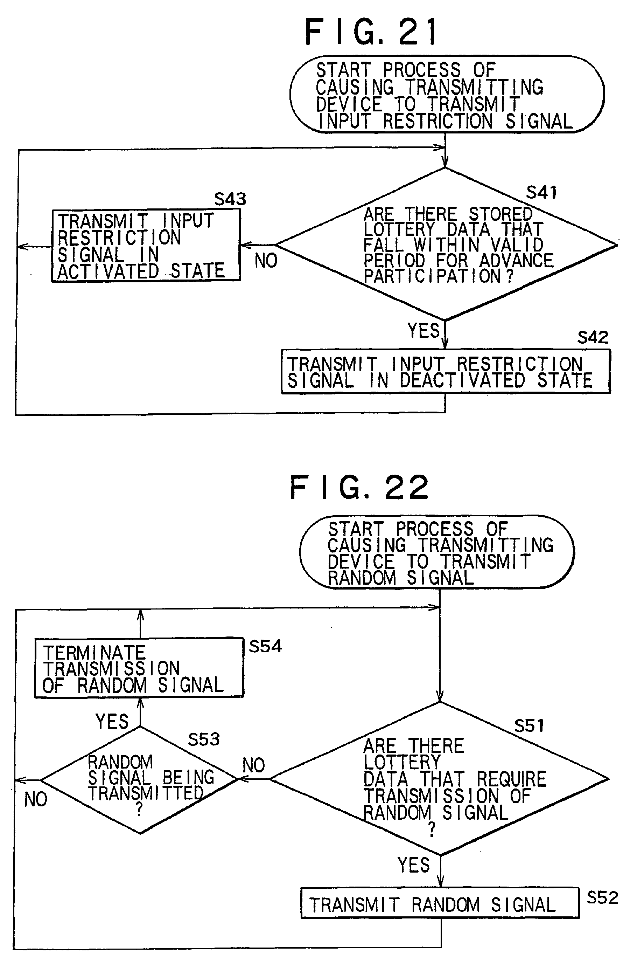

How the transmitting device transmits an input restriction signal will now be described with reference to the flowchart of Fig. 21. In step S41, the input restriction signal transmission program 32d judges whether there are any stored lottery data 32a that fall within the valid period for advance participation, by comparing that valid period for advance participation of all lottery data 32a in the storage unit 32 with the current time furnished by the calendar clock 36. If those stored lottery data 32a that fall within the valid period for advance participation are judged to exist in step S41, then step S42 is reached.

In step S42, the input restriction signal transmission program 32d transmits an input restriction signal headed by the applicable lottery ID and with the "de-activate" notation set therein. Step S42 is followed by step S41.

If those stored lottery data 32a that fall within the valid period for advance participation are not judged to exist in step S41, then step S43 is reached. In step S43, the input restriction signal transmission program 32d transmits an input restriction signal headed by the applicable lottery ID and with the "activate" notation set therein. Step S43 is followed by step S41 and the subsequent steps are repeated.

How the random signal transmission program 32e transmits a random signal will now be described by referring to the flowchart of Fig. 22. In step S51, the random signal transmission program 32e judges whether there are those lottery data 32a in the storage unit 32 which require transmission of a random signal, i.e., whether there exist the lottery data 32a which have the receiving device character string designated as a random character string and which fall within the valid period for advance participation. If such lottery data are judged to exist in step S51, step S52 is reached in which the random signal transmission program 32e causes the transmission unit 37 to transmit a random signal.

If in step S51 the lottery data 32a requiring transmission of a random signal is not judged to exist, then step S53 is reached. In step S53, the random signal transmission program 32e judges whether a random signal is being transmitted. If in step S53 the random signal is judged to be in transmission, step S54 is reached.

In step S54, the random signal transmission program 32e causes the transmission unit 37 to terminate random signal transmission. If in step S53 no random signal is judged to be in transmission, then step S51 is reached again and the subsequent steps are repeated.

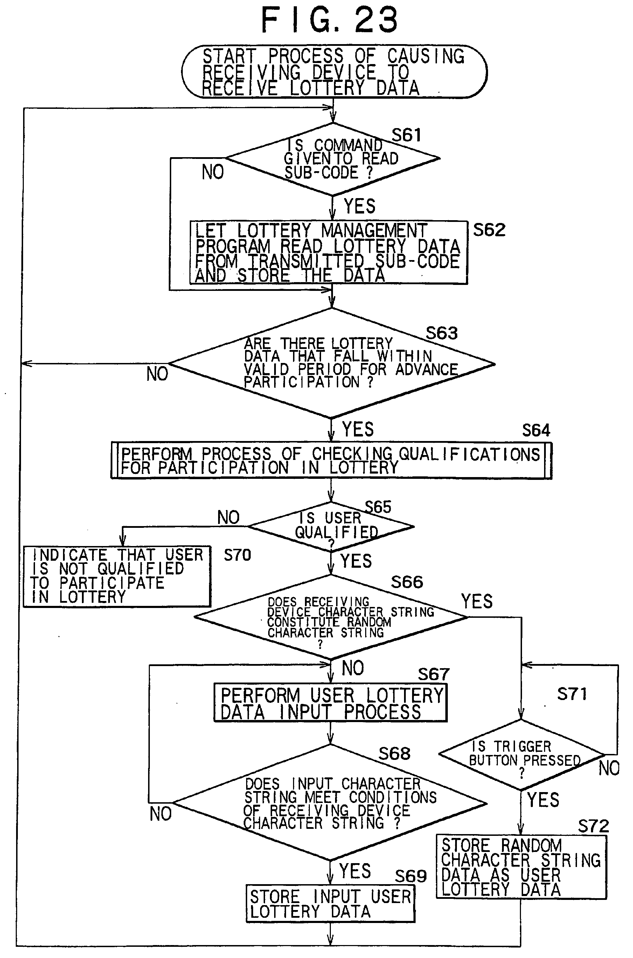

How the receiving device receives the lottery data will now be described by referring to the flowchart of Fig. 23.

In step S61, the lottery data management program 52b judges whether a command is given to read a lottery sub-code by the user operating the trigger button 60 on the keyboard 61 or the like. If such a command is judged to be given, then step S62 is reached.

In step S62, the lottery data management program 52b receives the transmitted sub-code. The sub-code is stored into the storage unit 52 as the lottery data 52f.

In step S63, the lottery data management program 52b judges whether there are any lottery data that fall within the valid period for advance participation. If such data are judged to exist in step S63, step S64 is reached in which the lottery data management program 52b performs a process of checking qualifications for participation in the lottery of interest.

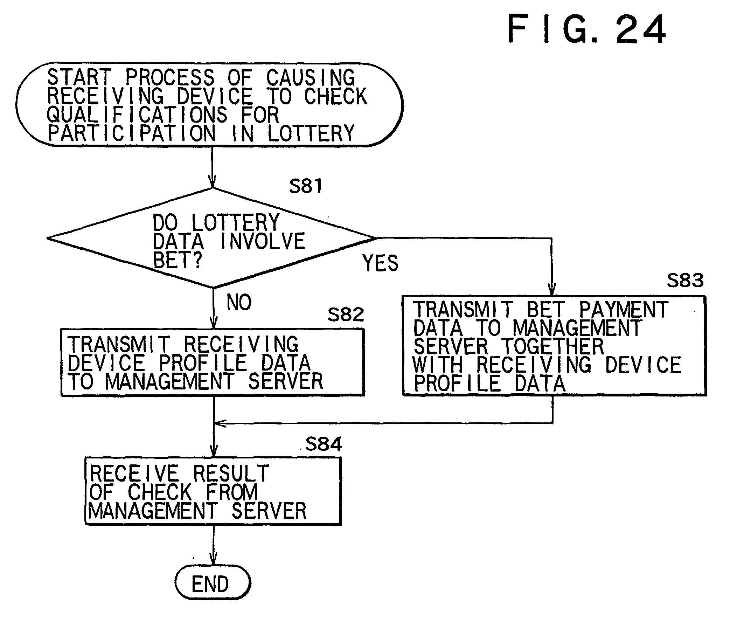

Described below with reference to the flowchart of Fig. 24 is how the lottery participation qualification check is carried out by the receiving device 3. In step S81, the bet payment program 52j of the receiving device 3 searches the relevant lottery data 52f for a bet payment requirement to determine whether the lottery data involve a bet. If no bet is judged to be involved, then step S82 is reached.

In step S82, the receiving device ID management program 52k and receiving device profile management program 52l of the receiving unit 3 cause the communication unit 53 to transmit the receiving device ID 52n and receiving device profile 52o to the management server 4 as information for qualification check.

If in step S81 the applicable lottery is judged to involve a bet, step S83 is reached. In step S83, the receiving device ID management program 52k and receiving device profile management program 52l of the receiving unit 3 cause the communication unit 53 to transmit the receiving device ID 52n and receiving device profile 52o to the management server 4 as information for qualification check while the bet payment program 52j sends to the management server 4 the data necessary for bet payment such as the user's credit card number.

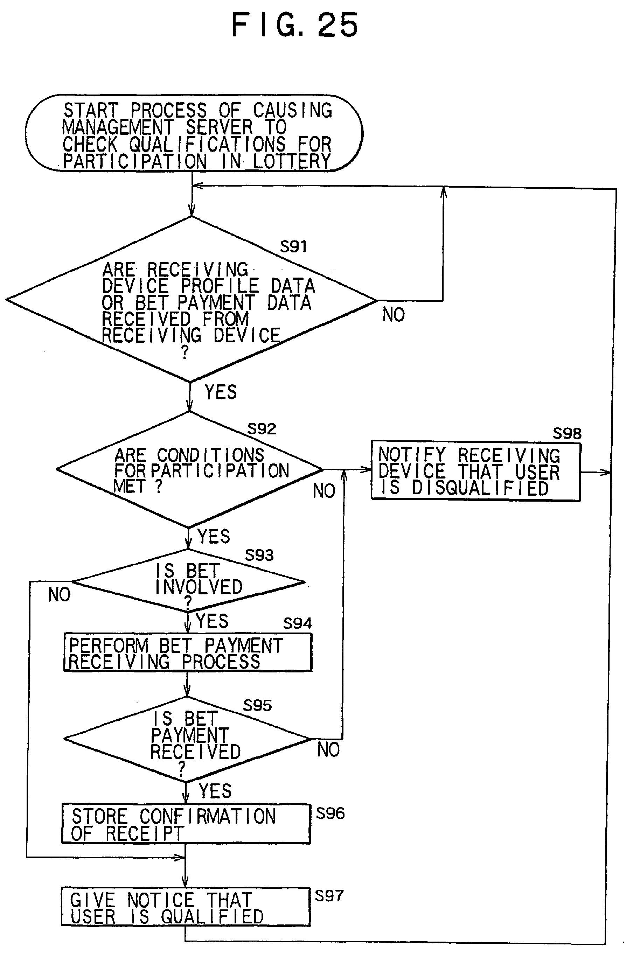

Described below with reference to the flowchart of Fig. 25 is how the qualification checking data transmitted from the receiving device 3 are received by the management server 4 following the above steps executed by the device 3.

In step S91, the bet payment program 92a, receiving device ID management program 92b, and receiving device profile management program 92c judge whether the receiving device ID 92j, receiving device profile 92k, and bet payment data such as a credit card number are received from the receiving device 3. Step S91 is repeated until the necessary data are judged received. If in step S91 the receiving device ID 92j, receiving device profile 92k, and bet payment information such as a credit card number are judged to be received from the receiving device 3, then step S92 is reached.

In step S92, the profile management program 92c judges whether the restrictions on participation set in the lottery data 92f identified by the applicable lottery ID are complied with. If the restrictions are judged to be complied with, then step S93 is reached. In step S93, the bet payment program 92a judges whether the lottery data 92f involve a bet. If a bet is judged involved, then step S94 is reached.

In step S94, the bet payment program 92a performs a bet payment process based on the bet payment information received from the receiving device 3. More specifically, the bet payment program 92a gets the bet payment received through the use of the credit card number or like information. In step S95, the bet payment program 92a judges whether the bet payment is received. If the bet payment is judged received in step S95, then step S96 is reached in which a confirmation of receipt (i.e., proof of payment) is stored along with the receiving device ID 92j and receiving device profile 92k.

In step S97, the receiving device profile management program 92c notifies the receiving device 3 through the communication unit 98 that the user is qualified to participate in the lottery. Step S97 is followed by step S91.

If in step S92 the restrictions on participation are not judged to be complied with, then step S98 is reached. In step S98, the receiving device profile management program 92c notifies the receiving device 3 through the communication unit 98 that the user is disqualified from participating in the lottery. Step S98 is followed by step S91. If in step S93 no bet is judged to be involved, steps S94 through S96 constituting the bet payment process are skipped and step S97 is reached. If in step S95 the bet payment is not judged received, then step S98 is reached and the subsequent steps are repeated.

Returning to the flowchart of Fig. 24 and in step S84, the lottery data management program 52b receives the result of qualification check from the management server 4. The result indicates whether the user is qualified to participate in the lottery. If the result says the user is judged qualified, a confirmation of receipt (proof of payment) is also reported.

Returning to the flowchart of Fig. 23 and in step S65, the lottery data management program 52b judges whether the user is qualified based on the result of qualification check sent from the management server 4. If the user is judged qualified, then step S66 is reached. In step S66, the lottery data management program 52b judges whether the receiving device character string of the applicable lottery data is a random character string. If the receiving device character string is not judged to be a random character string, then step S67 is reached.

In step S67, the input program 52h performs an input process by causing the display unit 58 to display an input screen in which to enter a receiving device character string as part of the lottery data. In step S68, the input program 52h judges whether the input character string complies with the conditions (criterion) for the receiving device character string. If the input character string is judged to comply with the relevant conditions, then step S69 is reached in which the input program 52h stores the input character string into the storage unit 52 as the input user lottery data 52m.

If in step S61 no command is judged given to read the sub-code, then step S62 is skipped and step S63 is reached. In step S63, a check is made to see if there exist lottery data that fall within the valid period for advance participation. If no such data are judged to exist in step S63, then step S61 is reached again and steps S61 through S63 are repeated until such lottery data falling within the valid period for participation are detected.

If in step S65 the user is judged disqualified, then step S70 is reached. In step S70, the lottery data management program 52b indicates on the display unit 58 that the user is disqualified from participating in the lottery of interest. Step S70 is followed by step S61.

If in step S66 the receiving device character string is judged to be a random character string, that means the random signal discussed above with reference to Fig. 22 is being output. In that case, step S71 is reached in which the input program 52h judges whether the trigger button 60 is pressed. Step S71 is repeated until the trigger button 60 is judged operated. With the trigger button thus activated, step S72 is reached.

In step S72, the input program 52h stores as the user lottery data 52g the random character string received when the trigger button 60 was activated. Step S72 is followed by step S61 and the subsequent steps are repeated.

If in step S68 the input character string is not judged to comply with the conditions for the receiving device character string, then step S67 is reached again. Steps S67 and S68 are repeated until the conditions for the receiving device character string are met.

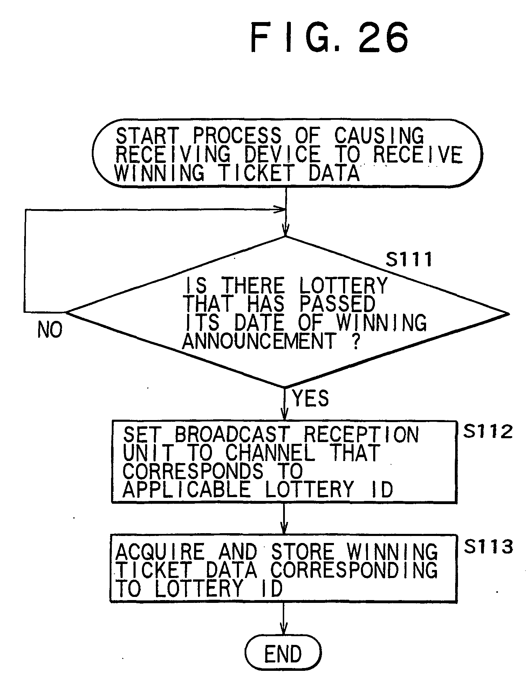

Described below with reference to the flowchart of Fig. 26 is how the receiving device 3 receives winning ticket data.

In step S111, the winning ticket data management program 52c of the receiving device 3 searches through the times and dates of announcement of the lottery data 52m to see if there is any lottery that is past its time and date of announcement on the basis of the current time information furnished by the calendar clock 54. Step S111 is repeated until such a lottery is detected. If any lottery meeting the above condition is judged to exist, step S112 is reached.

In step S112, the broadcast program reception program 52a causes the broadcast reception unit 55 to receive a broadcast program based on the channel name in the lottery data 52m corresponding to the lottery ID judged to be past the applicable date of announcement. In step S113, the broadcast program reception program 52a receives and stores the winning ticket data 52m corresponding to the lottery ID.

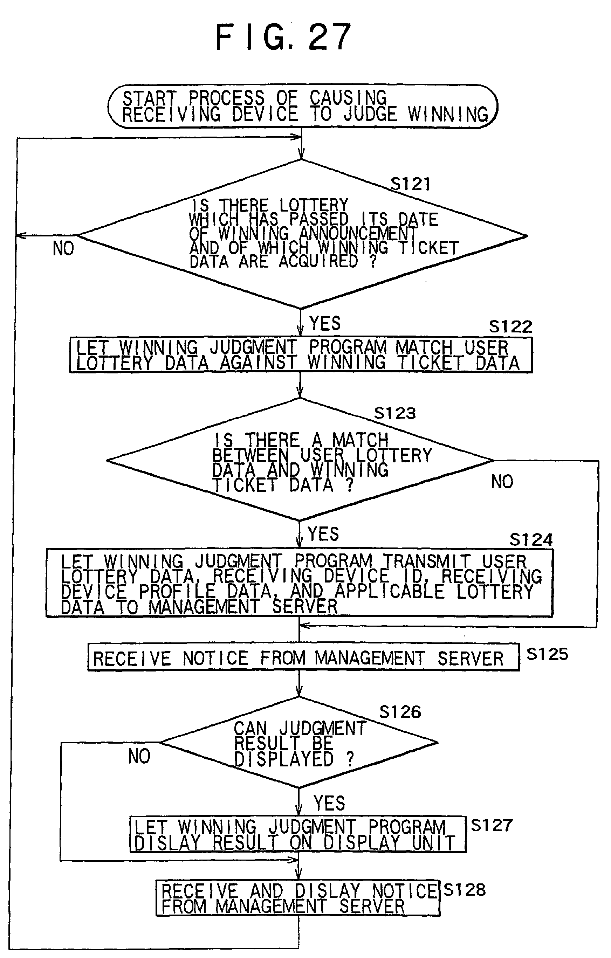

How the receiving device performs a winning judgment process will now be described by referring to Fig. 27. In step S121, the winning judgment program 51i references the current time information furnished by the calendar clock 54 and the lottery data 52f to judge whether there are any lottery data 52f which are past the date of announcement and of which the winning ticket data 52m are acquired. Step S121 is repeated until such lottery data 52f are detected. If it is judged that there exists a lottery which has passed its date of announcement and of which the winning ticket data 52m are acquired, then step S122 is reached.

In step S122, the winning judgment program 52i compares the user lottery data 52g with the winning ticket data 52m. In step S123, the winning judgment program 52i judges whether there is a match between the user lottery data 52g and the winning ticket data 52m. If such a match is detected, then step S124 is reached. In step S124, the winning judgment program 52i transmits through the communication unit 53 the user lottery data 52g, receiving device ID 52n, and receiving device profile 52o to the management server 4. If the lottery data 52f involve bet payment, then a confirmation of payment is also transmitted to the management server 4.

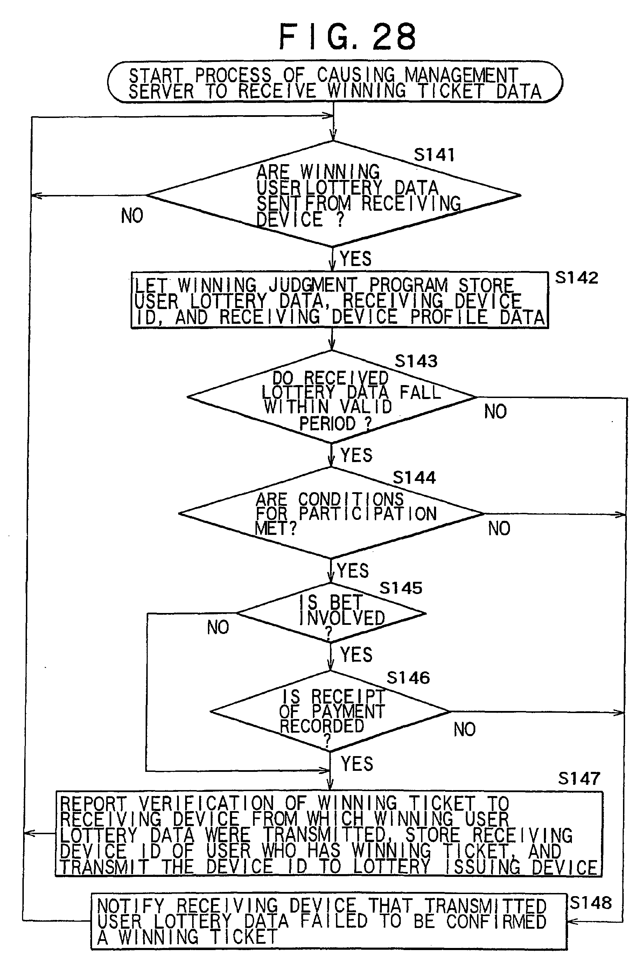

Referring now to the flowchart of Fig. 28, how the management server 4 receives winning ticket data from the receiving device 3 is described below.

In step S141, the winning judgment program 92d judges whether the communication unit 98 has received user lottery data constituting a win from the receiving device 3. If in step S141 the communication unit. 98 is judged to have received the user lottery data that turned out to be a win, then step S142 is reached. In step S142, the winning judgment program 92d places into the user lottery data temporary storage unit 94 the user lottery data 92h, receiving device ID 92j, and receiving device profile 92k received through the communication unit 98; the winning judgment data further stores the winning lottery data 92f and lottery data 92e corresponding to the lottery ID into a winning ticket data temporary storage unit 96.

In step S143, the winning judgment program 92d compares the valid period for reporting in the lottery data 92e of the applicable lottery ID with time information furnished by a calendar clock 95 so as to judge whether the current time provided by the calendar clock 95 falls within the valid period for reporting. If the current time is judged to fall within the valid period for reporting, then step S144 is reached.

In step S144, the winning judgment program 92d compares the restrictions on participation in the lottery data corresponding to the lottery ID with the receiving device profile 92k in order to determine whether the restrictions on participation are complied with. If the restrictions are judged to be complied with, then step S145 is reached.

In step S145, the winning judgment program 92d judges whether a bet is involved. If a bet is judged to be involved, step S146 is reached. In step S146, the winning judgment program 92d judges whether receipt of the bet payment (i.e., proof of payment) is recorded. If the receipt of the bet payment is judged confirmed, then step S147 is reached.

In step S147, the winning judgment program 92d assumes that the user lottery data received from the receiving device 3 constitute a win. Based on that assumption, the winning judgment program 92d gives a winning report through the communication unit 98 to the receiving device 3 that has transmitted the user lottery data, the report indicating that the user lottery data have turned out to be a win. At the same time, the winning judgment program 92d transmits to the lottery issuing device 1 the receiving device ID and receiving device profile of the receiving device 3 that has sent the user lottery data judged to have won. Step S147 is followed by step S141.

If in step S143 the lottery corresponding to the user lottery data received from the receiving device 3 is invalid, i.e., the lottery in question is not judged to fall within the valid period for reporting, then step S148 is reached.

In step S148, the winning judgment program 92d notifies the receiving device 3 through the communication unit 98 that the user lottery data received therefrom are not confirmed to have won. Step S148 is followed by step S141.

If in step S144 the receiving device profile in the received user lottery data are not judged to comply with the restrictions on participation, then step S148 is reached.

If in step S145 the user lottery data received from the receiving device 3 are not judged to involve a bet, then step S146 is skipped and step S147 is reached.

If in step S146 no receipt of bet payment is confirmed, then step S148 is reached.

In the steps described above, the winning judgment program 92d does not determine a win by comparing the winning ticket data 92f with the user lottery data 92g. That is because the comparison corresponds to step S122 and S123 in Fig. 27 which are already carried out by the receiving device 3. When such duplication of the processing is averted, the workload on the management server 4 is alleviated appreciably.

Returning to the flowchart of Fig. 27 and in step S125, the winning judgment program 52i receives from the management server 4 a report giving the result of winning judgment. In step S126, the winning judgment program 52i references the rules on display of judgment result in the winning ticket data having the applicable lottery ID, in order to judge whether the reported winning judgment can be displayed. If the result is judged to be displayable based on the rules, then step S127 is reached. In step S127, the winning judgment program 52i allows the judgment result to be displayed on the display unit 58.

In step S128, the winning judgment program 52i displays on the display unit 58 what is reported from the management server 4 (i.e., contents reported in step S147 or S148 of Fig. 28). Step S128 is followed by step S121.

If in step S123 a match is not judged to exist between the user lottery data 52g and the winning ticket data 52m, then step S124 is skipped and step S125 is reached.

If in step S126 the judgment result is not judged to be displayable, then step S127 is skipped and step S128 is reached.

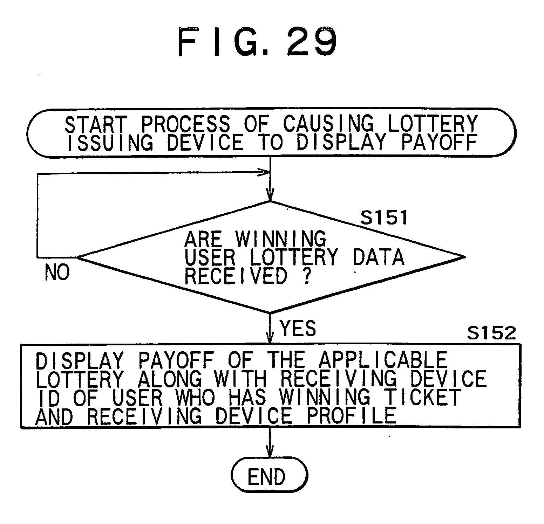

Described below with reference to the flowchart of Fig. 29 is how the lottery issuing device 1 gives a payoff display. In step S151, the winning ticket data management program 12b judges whether the user lottery data constituting a win along with the receiving device ID and receiving device profile are received from the management server 4. Step S151 is repeated until the winning user lottery data are judged received. With the user's winning ticket data received, step S152 is reached.

In step S152, the winning ticket data management program 12b references the winning ticket data 12d and the payoff of the applicable lottery ID so as to given on the display unit 13 a display of the amount of the payoff, the receiving device ID, and the receiving device profile. Given the display, the lottery sponsor managing the lottery issuing device 1 distributes accordingly the payoff to the winning participants. If the payoff is in cash, the lottery issuing device 1 asks the management server 4 whether the receiving device profile in question designates, say, a bank account. If such a bank account is judged included in the receiving device profile, the payoff may be transferred in electronic cash to the bank account in question.

Although the lottery has been cited above in conjunction with the inventive system, this is not limitative of the invention. Alternatively, the invention may also be applied to systems that handle the purchase and payoff of voting tickets in horse races, bicycle races, boat races and the like. With such systems, payoff information as part of the lottery data shown in Fig. 8 may be displayed dynamically using Java (interpreter language) on the display unit 58 of the receiving device 3.

In the foregoing description, the transmitting device 2 was shown transmitting data on two occasions independently: transmitting the lottery data 32a during the valid period for advance participation, and transmitting the winning ticket data 32b at the date of announcement. Alternatively, the lottery data 32a and winning ticket data 32b may be transmitted simultaneously during the valid period for advance participation. In this case, the transmitting device 2 should transmit the winning ticket data 32b in encrypted form. At or past the date of announcement, the winning judgment program 52i of the receiving device 3 should decrypt the received winning ticket data out of their encrypted state for necessary processing.

In the foregoing description, only the winning judgment program 52i of the receiving device 3 was shown verifying a match between the user lottery data 52g and the winning ticket data 52m. This arrangement was intended to alleviate the workload on the management server 4. Alternatively, the winning judgment program 52i of the receiving device 3 for comparing the user lottery data 52g with the winning ticket data 52m may be replaced by the winning judgment program 92d of the management server 4 for determining a match between the winning ticket data 92f and the user lottery data 92g. This arrangement, if adopted, will alleviate the workload on the receiving device 3 which in turn may dispense with an expensive, high-performance microcomputer in favor of a more economical one, whereby the cost of the receiving device 3 may be reduced appreciably. As another alternative, two matching processes may be carried out alternately to make the result of winning judgment doubly sure. More specifically, one process may be performed by the winning judgment program 52i of the receiving device 3 comparing the winning ticket data 52m with the user lottery data 52g, and the other process may be executed by the winning judgment program 92d of the management server 4 matching the winning ticket data 92f against the user lottery data 92g.

In the foregoing description of step S124, the winning judgment program 52i was shown transmitting the user lottery data 52g, receiving device ID 52n, and receiving device profile 52o to the management server 4 through the communication unit 53. Alternatively, the user lottery data 52g, receiving device ID 52n, and receiving device profile 52o may be recorded to the magnetic disc 211, optical disc 212, magneto-optical disc 213, or semiconductor memory 214 loaded in the drive 201. The magnetic disc 211, optical disc 212, magneto-optical disc 213, or semiconductor memory 214 may then be mailed to the management server 4, whereby all winning judgment processes may be carried out collectively. If the winning judgment is performed only by the winning judgment program 52i, then the workload on the management server 4 may be alleviated. With its workload thus reduced, the management server 4 can perform its processing at high speed.

In the foregoing description, compliance with the restrictions on participation was shown judged by the receiving device 3 based on the input restriction signal received from the transmitting device 2, the signal containing the "activate" or "de-activate" notation specifying the applicability of the restrictions. Alternatively, the receiving device 3 may judge compliance of the restrictions on the basis of the valid period for advance participation included in the lottery data 52f. In this case, the transmitting device 2 need not output the input restriction signal and can get its workload reduced correspondingly.

As described, during broadcasting of a broadcast program, the inventive system may announce holding of letter-guessing games, lottos or like contests; solicit participants in such games; and allow the participants to verify whether they have won in what they are taking part of. The system makes it possible to attract those who are interested in lotteries, raffles or like activities held simultaneously during broadcast of the program as added viewers or listeners to that program.

The series of steps described above may be executed either by hardware or by software. For software-based processing to take place, programs constituting the software may be either incorporated beforehand in dedicated hardware or installed upon use from a suitable storage medium into a general-purpose personal computer or like equipment capable of executing diverse functions.

As shown in Fig. 3, the storage medium is offered to users not only in the form of the HDD 52 which contains the programs and which are incorporated beforehand in the receiving device 3, but also as a package medium which, apart from computers, may be constituted by the magnetic disc 211 (including floppy discs), optical disc 212 (including CD-ROM (compact disc-read only memory) and DVD (digital versatile disc)), magneto-optical disc 213 (including MD (Mini-disc)), or semiconductor memory 214 (including Memory Stick).

In this specification, the steps which are stored on the storage medium and which describe the programs to be executed represent not only the processes that are carried out in the depicted sequence (i.e., on a time series basis) but also the processes that are conducted parallelly or individually.

In this specification, the term "system" refers to an entire configuration made up of a plurality of component devices.

### INDUSTRIAL APPLICABILITY

The broadcast transmission apparatus according to the invention may, simultaneously during broadcast of a program, announce holding of lottos, letter-guessing games, or other prize contests; solicit participants in such games; and allow the participants to verify whether they have won in what they are taking part of.

## Claims

1. A broadcast transmission apparatus for transmitting a broadcast program, said broadcast transmission apparatus comprising:
announcement information storing means for storing announcement information for soliciting participation in a letter-guessing game or a lotto;
winning information storing means for storing winning information about said letter-guessing game or about said lotto;
announcement information transmitting means for transmitting said announcement information stored by said announcement information storing means, said announcement information being multiplexed with said broadcast program when transmitted; and
winning information transmitting means for transmitting said winning information stored by said winning information storing means, said winning information being multiplexed with said broadcast program when transmitted.

2. A broadcast transmission apparatus according to claim 1, wherein said announcement information includes participation restriction information for restricting participation in said letter-guessing game or said lotto.

3. A broadcast transmission apparatus according to claim 1, wherein said announcement information transmitting means transmits a random character string for use in said letter-guessing game or said lotto in addition to said announcement information, said random character string being multiplexed with said broadcast program when transmitted.

4. A broadcast transmission apparatus according to claim 1, wherein said announcement information transmitting means transmits said announcement information together with broadcast program identification information for identifying said broadcast program, said announcement information and said broadcast program identification information being multiplexed with said broadcast program when transmitted.

5. A broadcast transmission apparatus according to claim 1, wherein said winning information transmitting means transmits said winning information together with broadcast program identification information for identifying said broadcast program, said winning information and said broadcast program identification information being multiplexed with said broadcast program when transmitted.

6. A broadcast transmission method for use with a broadcast transmission apparatus for transmitting a broadcast program, said broadcast transmission method comprising the steps of:
storing announcement information for soliciting participation in a letter-guessing game or a lotto;
storing winning information about said letter-guessing game or said lotto;
transmitting said announcement information stored in said announcement information storing step, said announcement information being multiplexed with said broadcast program when transmitted; and
transmitting said winning information stored in said winning information storing step, said winning information being multiplexed with said broadcast program when transmitted.

7. A storage medium which stores a computer-readable program for controlling a broadcast transmission apparatus for transmitting a broadcast program, the program comprising the steps of:
storing announcement information for soliciting participation in a letter-guessing game or a lotto;
storing winning information about said letter-guessing game or said lotto;
transmitting said announcement information stored in said announcement information storing step, said announcement information being multiplexed with said broadcast program when transmitted; and
transmitting said winning information stored in said winning information storing step, said winning information being multiplexed with said broadcast program when transmitted.

8. A program for use with a computer for controlling a broadcast transmission apparatus for transmitting a broadcast program, said program causing said computer to execute the steps of:
storing announcement information for soliciting participation in a letter-guessing game or a lotto;
storing winning information about said letter-guessing game or said lotto;
transmitting said announcement information stored in said announcement information storing step, said announcement information being multiplexed with said broadcast program when transmitted; and
transmitting said winning information stored in said winning information storing step, said winning information being multiplexed with said broadcast program when transmitted.

9. A broadcast reception apparatus for receiving a broadcast program, said broadcast reception apparatus comprising:
announcement information receiving means for receiving announcement information for soliciting participation in a letter-guessing game or a lotto, said announcement information being multiplexed with said broadcast program while being transmitted;
announcement information storing means for storing said announcement information received by said announcement information receiving means;
inputting means for inputting characters or numerals corresponding to said announcement information stored by said announcement information storing means;
input character storing means for storing said characters or said numerals input by said inputting means;
winning information receiving means for receiving winning information about said letter-guessing game or said lotto, said winning information being multiplexed with said broadcast program while being transmitted;
winning information storing means for storing said winning information received by said winning information receiving means;
comparing means for comparing said characters or said numerals input by said inputting means with said winning information stored by said winning information storing means; and
winning judging means for judging, based on a result of the comparison by said comparing means, whether said characters or said numerals stored by said input character storing means constitute a win.

10. A broadcast reception apparatus according to claim 9, further comprising triggering means for designating a time at which to receive said announcement information, wherein said announcement information receiving means receives said announcement information at the time designated by said triggering means.

11. A broadcast reception apparatus according to claim 9, wherein said announcement information includes restriction information for restricting characters or numerals that may be input by said inputting means, said broadcast reception apparatus further comprising input character restricting means for judging whether said characters or said numerals input by said inputting means comply with said restriction information, said input character restricting means further restricting the characters or numerals that may be input based on a result of the judgment.

12. A broadcast reception apparatus according to claim 9, wherein said announcement information includes valid period restriction information for restricting a valid period during which characters or numerals can be input by said inputting means, said broadcast reception apparatus further comprising input period restricting means for restricting the period during which to input said characters or said numerals based on said valid period restriction information.

13. A broadcast reception apparatus according to claim 9, wherein said announcement information includes time information for designating a time at which said winning information is to be transmitted, wherein said winning information receiving means receives said winning information at the designated time at which said winning information is transmitted.

14. A broadcast reception apparatus according to claim 9, wherein said announcement information includes participation restriction information for restricting the solicited participation in said letter-guessing game or said lotto, said broadcast reception apparatus further comprising participation restriction-based input restricting means for restricting input of said characters or said numerals by said inputting means in accordance with said participation restriction information.

15. A broadcast reception apparatus according to claim 9, further comprising communicating means for communicating with an information processing apparatus over a network, wherein said communicating means executes a bet payment process in conjunction with said information processing apparatus based on an ID identifying each broadcast reception apparatus and on a profile of a user having each identified broadcast reception apparatus, said communicating means further receiving a confirmation of payment from said information processing apparatus when said bet payment process is completed.

16. A broadcast reception apparatus according to claim 15, wherein, if said characters or said numerals are judged to constitute a win by said winning judging means, then said communicating means transmits to said information processing apparatus a winning report comprising said characters or said numerals input by said inputting means, said ID, said profile, and said confirmation of payment, said information processing apparatus further judging whether said winning report is valid upon comparing said announcement information with said winning information.

17. A broadcast reception apparatus according to claim 16, wherein said announcement information includes valid period information for defining a valid period during which to make said winning report, and wherein, if said characters or said numerals are judged to constitute a win by said winning judging means, then said communicating means transmits to said information processing apparatus said winning report comprising said characters or said numerals input by said inputting means, said ID, said profile, and said confirmation of payment, said information processing apparatus further judging whether said winning report is valid upon comparing said announcement information with said winning information and upon determining whether said winning report falls within said valid period.

18. A broadcast reception apparatus according to claim 9, wherein said announcement information receiving means receives a random character string for use in said letter-guessing game or said lotto in addition to said announcement information, said random character string being multiplexed with said broadcast program.

19. A broadcast reception apparatus according to claim 9, wherein said announcement information receiving means receives said announcement information along with said program identification information for identifying said broadcast program, said announcement information being multiplexed with said broadcast program.

20. A broadcast reception apparatus according to claim 9, wherein said winning information receiving means receives said winning information along with said program identification information for identifying said broadcast program, said winning information being multiplexed with said broadcast program.

21. A broadcast reception method for use with a broadcast reception apparatus for receiving a broadcast program, said broadcast reception method comprising the steps of:
receiving announcement information for soliciting participation in a letter-guessing game or a lotto, said announcement information being multiplexed with said broadcast program while being transmitted;
storing said announcement information received in said announcement information receiving step;
inputting characters or numerals corresponding to said announcement information stored in said announcement information storing step;
storing said characters or said numerals input in said inputting step;
receiving winning information about said letter-guessing game or said lotto, said winning information being multiplexed with said broadcast program while being transmitted;
storing said winning information received in said winning information receiving step;
comparing said characters or said numerals input in said inputting step with said winning information stored in said winning information storing step; and
judging, based on a result of the comparison in said comparing step, whether said characters or said numerals stored in said input character storing step constitute a win.

22. A storage medium which stores a computer-readable program for controlling a broadcast reception apparatus for receiving a broadcast program, the program comprising the steps of:
receiving announcement information for soliciting participation in a letter-guessing game or a lotto, said announcement information being multiplexed with said broadcast program while being transmitted;
storing said announcement information received in said announcement information receiving step;
inputting characters or numerals corresponding to said announcement information stored in said announcement information storing step;
storing said characters or said numerals input in said inputting step;
receiving winning information about said letter-guessing game or said lotto, said winning information being multiplexed with said broadcast program while being transmitted;
storing said winning information received in said winning information receiving step;
comparing said characters or said numerals input in said inputting step with said winning information stored in said winning information storing step; and
judging, based on a result of the comparison in said comparing step, whether said characters or said numerals stored in said input character storing step constitute a win.

23. A program for use with a computer for controlling a broadcast reception apparatus for receiving a broadcast program, said program causing said computer to execute the steps of:
receiving announcement information for soliciting participation in a letter-guessing game or a lotto, said announcement information being multiplexed with said broadcast program while being transmitted;
storing said announcement information received in said announcement information receiving step;
inputting characters or numerals corresponding to said announcement information stored in said announcement information storing step;
storing said characters or said numerals input in said inputting step;
receiving winning information about said letter-guessing game or said lotto, said winning information being multiplexed with said broadcast program while being transmitted;
storing said winning information received in said winning information receiving step;
comparing said characters or said numerals input in said inputting step with said winning information stored in said winning information storing step; and
judging, based on a result of the comparison in said comparing step, whether said characters or said numerals stored in said input character storing step constitute a win.

24. A broadcasting system comprising a broadcast transmission apparatus for transmitting a broadcast program and a broadcast reception apparatus for receiving said broadcast program;
wherein said broadcast transmission apparatus includes:
first announcement information storing means for storing announcement information for soliciting participation in a letter-guessing game or a lotto;
first winning information storing means for storing winning information about said letter-guessing game or about said lotto;
announcement information transmitting means for transmitting said announcement information stored by said first announcement information storing means, said announcement information being multiplexed with said broadcast program when transmitted; and
winning information transmitting means for transmitting said winning information stored by said first winning information storing means, said winning information being multiplexed with said broadcast program when transmitted; and
wherein said broadcast reception apparatus includes:
announcement information receiving means for receiving said announcement information for soliciting participation in said letter-guessing game or said lotto, said announcement information being multiplexed with said broadcast program while being transmitted;
second announcement information storing means for storing said announcement information received by said announcement information receiving means;
inputting means for inputting characters or numerals corresponding to said announcement information stored by said second announcement information storing means;
input character storing means for storing said characters or said numerals input by said inputting means;
winning information receiving means for receiving said winning information about said letter-guessing game or said lotto, said winning information being multiplexed with said broadcast program while being transmitted;
second winning information storing means for storing said winning information received by said winning information receiving means;
comparing means for comparing said characters or said numerals input by said inputting means with said winning information stored by said second winning information storing means; and
winning judging means for judging, based on a result of the comparison by said comparing means, whether said characters or said numerals stored by said input character storing means constitute a win.

25. A broadcasting system according to claim 24, wherein said announcement information includes participation restriction information for restricting participation in said letter-guessing game or said lotto.

26. A broadcasting system according to claim 25, further comprising participation restriction-based input restricting means for restricting input of said characters or said numerals by said inputting means in accordance with said participation restriction information.

27. A broadcasting system according to claim 24, wherein said announcement information transmitting means transmits a random character string for use in said letter-guessing game or said lotto in addition to said announcement information, said random character string being multiplexed with said broadcast program when transmitted.

28. A broadcasting system according to claim 24, wherein said announcement information transmitting means transmits said announcement information along with program identification information for identifying said broadcast program, said announcement information being multiplexed with said broadcast program when transmitted.

29. A broadcasting system according to claim 24, wherein said winning information transmitting means transmits said winning information along with program identification information for identifying said broadcast program, said winning information being multiplexed with said broadcast program when transmitted.

30. A broadcasting system according to claim 24, further comprising triggering means for designating a time at which to receive said announcement information, wherein said announcement information receiving means receives said announcement information at the time designated by said triggering means.

31. A broadcasting system according to claim 24, wherein said announcement information includes restriction information for restricting characters or numerals that may be input by said inputting means, said broadcasting system further comprising input character restricting means for judging whether said characters or said numerals input by said inputting means comply with said restriction information, said input character restricting means further restricting the characters or numerals that may be input based on a result of the judgment.

32. A broadcasting system according to claim 24, wherein said announcement information includes valid period restriction information for restricting a valid period during which characters or numerals can be input by said inputting means, said broadcasting system further comprising input period restricting means for restricting the period during which to input said characters or said numerals based on said valid period restriction information.

33. A broadcasting system according to claim 24, wherein said announcement information includes time information for designating a time at which said winning information is to be transmitted, wherein said winning information receiving means receives said winning information at the designated time at which said winning information is transmitted.

34. A broadcasting system according to claim 24, further comprising communicating means for communicating with an information processing apparatus over a network, wherein said communicating means executes a bet payment process in conjunction with said information processing apparatus based on an ID identifying each broadcast reception apparatus and on a profile of a user having each identified broadcast reception apparatus, said communicating means further receiving a confirmation of payment from said information processing apparatus when said bet payment process is completed.

35. A broadcasting system according to claim 34, wherein, if said characters or said numerals are judged to constitute a win by said winning judging means, then said communicating means transmits to said information processing apparatus a winning report comprising said characters or said numerals input by said inputting means, said ID, said profile, and said confirmation of payment, said information processing apparatus further judging whether said winning report is valid upon comparing said announcement information with said winning information.

36. A broadcasting system according to claim 35, wherein said announcement information includes valid period information for defining a valid period during which to make said winning report, and wherein, if said characters or said numerals are judged to constitute a win by said winning judging means, then said communicating means transmits to said information processing apparatus said winning report comprising said characters or said numerals input by said inputting means, said ID, said profile, and said confirmation of payment, said information processing apparatus further judging whether said winning report is valid upon comparing said announcement information with said winning information and upon determining whether said winning report falls within said valid period.

37. A broadcasting system according to claim 24, wherein said announcement information receiving means receives a random character string for use in said letter-guessing game or said lotto in addition to said announcement information, said random character string being multiplexed with said broadcast program.

38. A broadcasting system according to claim 24, wherein said announcement information receiving means receives said announcement information along with said program identification information for identifying said broadcast program, said announcement information being multiplexed with said broadcast program.

39. A broadcasting system according to claim 24, wherein said winning information receiving means receives said winning information along with said program identification information for identifying said broadcast program, said winning information being multiplexed with said broadcast program.

40. A broadcasting method for use with a broadcasting system comprising a broadcast transmission apparatus for transmitting a broadcast program and a broadcast reception apparatus for receiving said broadcast program, said broadcasting method being made up of a broadcast transmission method and a broadcast reception method for use with said broadcast transmission apparatus and said broadcast reception apparatus respectively;
wherein said broadcast transmission method comprises the steps of:
firstly storing announcement information for soliciting participation in a letter-guessing game or a lotto;
firstly storing winning information about said letter-guessing game or about said lotto;
transmitting said announcement information stored in said first announcement information storing step, said announcement information being multiplexed with said broadcast program when transmitted; and
transmitting said winning information stored in said first winning information storing step, said winning information being multiplexed with said broadcast program when transmitted; and
wherein said broadcast reception method comprises the steps of:
receiving said announcement information for soliciting participation in said letter-guessing game or said lotto, said announcement information being multiplexed with said broadcast program while being transmitted;
secondly storing said announcement information received in said announcement information receiving step;
inputting characters or numerals corresponding to said announcement information stored in said second announcement information storing step;
storing said characters or said numerals input in said inputting step;
receiving said winning information about said letter-guessing game or said lotto, said winning information being multiplexed with said broadcast program while being transmitted;
secondly storing said winning information received in said winning information receiving step;
comparing said characters or said numerals input in said inputting step with said winning information stored in said second winning information storing step; and
judging, based on a result of the comparison in said comparing step, whether said characters or said numerals stored in said input character storing step constitute a win.

41. A storage medium which stores a computer-readable program for controlling a broadcasting system comprising a broadcast transmission apparatus for transmitting a broadcast program and a broadcast reception apparatus for receiving said broadcast program, the program being made up of a broadcast transmission apparatus controlling program and a broadcast reception apparatus controlling program;
wherein said broadcast transmission apparatus controlling program comprises the steps of:
firstly storing announcement information for soliciting participation in a letter-guessing game or a lotto;
firstly storing winning information about said letter-guessing game or about said lotto;
transmitting said announcement information stored in said first announcement information storing step, said announcement information being multiplexed with said broadcast program when transmitted; and
transmitting said winning information stored in said first winning information storing step, said winning information being multiplexed with said broadcast program when transmitted; and
wherein said broadcast reception apparatus controlling program comprises the steps of:
receiving said announcement information for soliciting participation in said letter-guessing game or said lotto, said announcement information being multiplexed with said broadcast program while being transmitted;
secondly storing said announcement information received in said announcement information receiving step;
inputting characters or numerals corresponding to said announcement information stored in said second announcement information storang step;
storing said characters or said numerals input in said inputting step;
receiving said winning information about said letter-guessing game or said lotto, said winning information being multiplexed with said broadcast program while being transmitted;
secondly storing said winning information received in said winning information receiving step;
comparing said characters or said numerals input in said inputting step with said winning information stored in said second winning information storing step; and
judging, based on a result of the comparison in said comparing step, whether said characters or said numerals stored in said input character storing step constitute a win.

42. A program for use with a computer for controlling a broadcasting system comprising a broadcast transmission apparatus for transmitting a broadcast program and a broadcast reception apparatus for receiving said broadcast program, said computer being made up of a broadcast transmission apparatus controlling computer and a broadcast reception apparatus controlling computer;
wherein said program causes said broadcast transmission apparatus controlling computer to execute the steps of:
firstly storing announcement information for soliciting participation in a letter-guessing game or a lotto;
firstly storing winning information about said letter-guessing game or about said lotto;
transmitting said announcement information stored in said first announcement information storing step, said announcement information being multiplexed with said broadcast program when transmitted; and
transmitting said winning information stored in said first winning information storing step, said winning information being multiplexed with said broadcast program when transmitted; and
wherein said program causes said broadcast reception apparatus controlling computer to execute the steps of:
receiving said announcement information for soliciting participation in said letter-guessing game or said lotto, said announcement information being multiplexed with said broadcast program while being transmitted;
secondly storing said announcement information received in said announcement information receiving step;
inputting characters or numerals corresponding to said announcement information stored in said second announcement information storing step;
storing said characters or said numerals input in said inputting step;
receiving said winning information about said letter-guessing game or said lotto, said winning information being multiplexed with said broadcast program while being transmitted;
secondly storing said winning information received in said winning information receiving step;
comparing said characters or said numerals input in said inputting step with said winning information stored in said second winning information storing step; and
judging, based on a result of the comparison in said comparing step, whether said characters or said numerals stored in said input character storing step constitute a win.
